(19) Europäisches Patentamt
European Patent Office
Office européen des brevets

(11) EP 4 545 585 A1

(12) **EUROPEAN PATENT APPLICATION**
published in accordance with Art. 153(4) EPC

(43) Date of publication:
**30.04.2025 Bulletin 2025/18**

(21) Application number: **22948053.8**

(22) Date of filing: **01.11.2022**

(51) International Patent Classification (IPC):
***C08G 64/02*** *(2006.01)* ***C08G 18/44*** *(2006.01)*
***C08G 65/00*** *(2006.01)* ***C09D 5/02*** *(2006.01)*
***C09D 169/00*** *(2006.01)* ***C09D 175/08*** *(2006.01)*

(52) Cooperative Patent Classification (CPC):
**C08G 18/44; C08G 64/02; C08G 65/00; C09D 5/02; C09D 169/00; C09D 175/08**

(86) International application number:
**PCT/JP2022/040887**

(87) International publication number:
**WO 2023/248494 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.06.2022 JP 2022101847**

(71) Applicant: **Asahi Kasei Kabushiki Kaisha**
**Tokyo 1000006 (JP)**

(72) Inventor: **KAWAI, Yasufumi**
**Tokyo 100-0006 (JP)**

(74) Representative: **Strehl & Partner mbB**
**Maximilianstrasse 54**
**80538 München (DE)**

(54) **OXYETHYLENE STRUCTURE-CONTAINING POLYCARBONATE POLYOL AND USE OF SAME**

(57) Provided is an oxyethylene structure-containing polycarbonate polyol having a hydroxy value of 10 to 400 mg-KOH/g, the oxyethylene structure-containing polycarbonate polyol comprising predetermined structural units in predetermined amounts.

EP 4 545 585 A1

## Description

Technical Field

The present invention relates to an oxyethylene structure-containing polycarbonate polyol and use thereof.

Background Art

Polyurethane resins have heretofore been used in a wide range of fields such as synthetic leather, artificial leather, adhesives, coating materials for furniture, and coating materials for automobiles. Of starting materials of the polyurethane resins, polyether polyol, polyester polyol, and polycarbonate polyol are used as polyol components to be reacted with isocyanate. In general, a polyurethane resin obtained using polycarbonate polyol as a polyol component is known to be superior in endurance such as moist heat resistance, solvent resistance, sunscreen resistance, and scratch resistance to a polyurethane resin obtained using polyether polyol or polyester polyol.

In recent years, there has been a growing need for polycarbonate polyol dispersible in water as a sustainable material. For example, Patent Literature 1 discloses a polycarbonate diol composition excellent in water dilutability. For example, Patent Literature 2 discloses a polycarbonate/polyoxyethylene block polymer for aqueous compositions that is excellent in water dilutability and can be used as an aqueous composition. For example, Patent Literature 3 discloses a polycarbonate diol composition capable of forming a coating film excellent in contamination resistance and chemical resistance.

Citation List

Patent Literature

Patent Literature 1: Japanese Patent Laid-Open No. 2014-80530
Patent Literature 2: International Publication No. WO 2015/170374
Patent Literature 3: Japanese Patent Laid-Open No. 2019-210314

Summary of Invention

Technical Problem

In general, for example, a base agent and a curing agent in a two-pack urethane coating material are mixed before painting and however, separately stored until painting. Depending on a storage location, these components may be stored for a long period in an environment of room temperature or higher.

Nonetheless, none of Patent Literatures 1, 2, and 3 mention the stability of an aqueous dispersion of polycarbonate polyol dispersible in water when the aqueous dispersion is stored at room temperature or higher. Thus, these patent literatures are still susceptible to improvement.

For example, in a two-pack urethane coating material, a polyurethane, and/or an aqueous polyurethane, polycarbonate polyol may be used in combination with ether polyol. However, the number-average molecular weight of the polycarbonate polyol may be limited to 500 or lower due to compatibility problems.

Nonetheless, none of Patent Literatures 1, 2, and 3 mention the compatibility of polycarbonate polyol dispersible in water with ether polyol. Thus, these patent literatures are still susceptible to improvement.

Accordingly, an object of the present invention is to provide an oxyethylene structure-containing polycarbonate polyol excellent in stability of an aqueous dispersion and/or compatibility with ether polyol.

Solution to Problem

The present inventor has conducted diligent studies to attain the object and has consequently completed the present invention by finding that a polycarbonate polyol having a specific structure exerts excellent stability of an aqueous dispersion and/or compatibility with ether polyol.

Specifically, the present invention is configured as follows.

[1] An oxyethylene structure-containing polycarbonate polyol having a hydroxy value of 10 to 400 mg-KOH/g,

the oxyethylene structure-containing polycarbonate polyol comprising a structural unit represented by the following formula (A), a structural unit represented by the following formula (B), and a structural unit represented by the following formula (BB), wherein

a molar quantity of the structural unit represented by the formula (A) is 30 to 90% by mol based on the total molar quantity of the structural unit represented by the formula (A) and the structural unit represented by the formula (B),

a molar quantity of the structural unit represented by the formula (B) is 10 to 70% by mol based on the total molar quantity of the structural unit represented by the formula (A) and the structural unit represented by the formula (B), and

a value obtained according to the following expression (i) is 150.0 to 400.0:

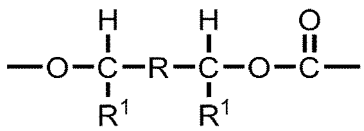

· · · (A)

wherein

R is a divalent aliphatic hydrocarbon group optionally containing a heteroatom, and/or a divalent aromatic hydrocarbon group optionally containing a heteroatom, and

each $R^1$ is independently hydrogen or an aliphatic hydrocarbon group having 1 to 5 carbon atoms,

$$-O-CH_2-CH_2- \quad \cdots (B)$$

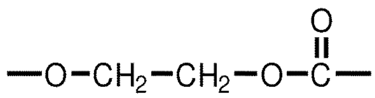

· · · (BB)

$$\left( \frac{BB}{A} \div \frac{B}{A+B} \right) \times Mn \quad \cdots (i)$$

wherein

A is a molar quantity of the structural unit represented by the formula (A),

B is a molar quantity of the structural unit represented by the formula (B),

BB is a molar quantity of the structural unit represented by the formula (BB), and

Mn is a number-average molecular weight of the oxyethylene structure-containing polycarbonate polyol.

[2] The oxyethylene structure-containing polycarbonate polyol according to [1], wherein R is a divalent aliphatic hydrocarbon group optionally containing a heteroatom.

[3] The oxyethylene structure-containing polycarbonate polyol according to [1] or [2], wherein a molecular weight distribution (Mw/Mn) is 1.50 to 5.00.

[4] The oxyethylene structure-containing polycarbonate polyol according to [1] to [3], wherein $R^1$ is hydrogen.

[5] The oxyethylene structure-containing polycarbonate polyol according to any of [1] to [4], wherein an average number of carbon atoms of a polyvalent hydroxy compound (except for a polyvalent hydroxy compound having an oxyethylene structure) obtained by the hydrolysis of the oxyethylene structure-containing polycarbonate polyol is 2.0 or more and 15.0 or less.

[6] The oxyethylene structure-containing polycarbonate polyol according to [1] to [5], wherein a polyvalent hydroxy compound (except for a polyvalent hydroxy compound having an oxyethylene structure) obtained by the hydrolysis of the oxyethylene structure-containing polycarbonate polyol comprises at least one selected from the group consisting of 1,2-propanediol, 1,3-propanediol, 2-methyl-1,3-propanediol, 1,4-butanediol, 1,5-pentanediol, 3-methyl-1,5-pentanediol, and 1,6-hexanediol.

[7] The oxyethylene structure-containing polycarbonate polyol according to any of [1] to [6], wherein a number-average molecular weight of a polyvalent hydroxy compound having an oxyethylene structure obtained by the hydrolysis of the oxyethylene structure-containing polycarbonate polyol is 300 to 3000.

[8] The oxyethylene structure-containing polycarbonate polyol according to [7], wherein the polyvalent hydroxy compound having an oxyethylene structure is polyethylene glycol.

[9] A urethane-modified oxyethylene structure-containing polycarbonate polyol obtained using the oxyethylene structure-containing polycarbonate polyol according to any of [1] to [8].

[10] A coating material comprising the oxyethylene structure-containing polycarbonate polyol according to any of [1] to [9].

[11] The coating material according to [10], wherein the coating material is an aqueous coating material.

[12] A polyurethane obtained using the oxyethylene structure-containing polycarbonate polyol according to any of [1] to [9].

[13] An aqueous polyurethane obtained using the oxyethylene structure-containing polycarbonate polyol according to any of [1] to [9].

[14] An artificial leather comprising the polyurethane according to [12].

[15] An artificial leather comprising the aqueous polyurethane according to [13].

[16] A synthetic leather comprising the polyurethane according to [12].

[17] A synthetic leather comprising the aqueous polyurethane according to [13].

[18] A coating material comprising the polyurethane according to [12].

[19] A coating material comprising the aqueous polyurethane according to [13].

[20] A coating film obtained from the coating material according to [10].

[21] A coating film obtained from the coating material according to [11].

## Advantageous Effect of Invention

The present invention can provide an oxyethylene structure-containing polycarbonate polyol excellent in stability of an aqueous dispersion and/or compatibility with ether polyol.

## Brief Description of Drawing

[Figure 1] Figure 1 shows a NMR spectrum of an oxyethylene structure-containing polycarbonate polyol.

## Description of Embodiments

Hereinafter, the mode for carrying out the present invention (hereinafter, referred to as the "present embodiment") will be described in detail. The present invention is not limited by the description below and can be carried out with various modification or changes made therein without departing from the spirit of the present invention.

## [Oxyethylene structure-containing polycarbonate polyol]

The oxyethylene structure-containing polycarbonate polyol of the present embodiment

has a hydroxy value of 10 to 400 mg-KOH/g, and
comprises a structural unit represented by the following formula (A), a structural unit represented by the following formula (B), and a structural unit represented by the following formula (BB), wherein
a molar quantity of the structural unit represented by the formula (A) is 30 to 90% by mol based on the total molar quantity of the structural unit represented by the formula (A) and the structural unit represented by the formula (B),
a molar quantity of the structural unit represented by the formula (B) is 10 to 70% by mol based on the total molar quantity of the structural unit represented by the formula (A) and the structural unit represented by the formula (B), and
a value obtained according to the following expression (i) is 150.0 to 400.0:

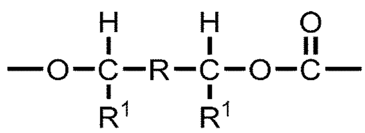

· · · (A)

wherein

R is a divalent aliphatic hydrocarbon group optionally containing a heteroatom, and/or a divalent aromatic hydrocarbon group optionally containing a heteroatom, and
each $R^1$ is independently hydrogen or an aliphatic hydrocarbon group having 1 to 5 carbon atoms,

$$-O-CH_2-CH_2- \quad \cdots (B)$$

$$-O-CH_2-CH_2-O-\overset{O}{\overset{\|}{C}}- \quad \cdots (BB)$$

$$\left( \frac{BB}{A} \div \frac{B}{A+B} \right) \times Mn \quad \cdots (i)$$

wherein

A is a molar quantity of the structural unit represented by the formula (A),
B is a molar quantity of the structural unit represented by the formula (B),
BB is a molar quantity of the structural unit represented by the formula (BB), and
Mn is a number-average molecular weight of the oxyethylene structure-containing polycarbonate polyol.

The oxyethylene structure-containing polycarbonate polyol of the present embodiment may be a mixture of a plurality of polyols. In this case, some of the plurality of polyols can have an oxyethylene structure.

Although the formula (B) partially has the same structure as that of the formula (BB), the formula (B) and the formula (BB) are different from each other without overlapping with each other. Specifically, when the oxyethylene structure-containing polycarbonate polyol has a structure where terminal carbon in the structure of the formula (B) is bonded to a carbonyl group via oxygen, this structure is determined as the formula (BB), not the formula (B).

When R in the formula (A) has a predetermined structure, the formula (B) may partially have the same structure as that of the formula (A). However, the formula (B) and the formula (A) are different from each other without overlapping with each other.

The oxyethylene structure-containing polycarbonate polyol of the present embodiment configured as described above is excellent in stability of an aqueous dispersion and compatibility with ether polyol.

The total amount of the structural units represented by the formula (A), the formula (B), and the formula (BB) is preferably 35 to 100% by mol, more preferably 45 to 100% by mol, further preferably 50 to 100% by mol, still further preferably 55 to 100% by mol, particularly preferably 60 to 100% by mol, more particularly preferably 70 to 100% by mol, extremely preferably 80 to 100% by mol, most preferably 90 to 100% by mol, based on all the structural units constituting the oxyethylene structure-containing polycarbonate polyol.

When the total amount of the structural units represented by the formula (A), the formula (B), and the formula (BB) falls within the range described above, stability of an aqueous dispersion and endurance tend to be excellent. Furthermore, a coating film, a polyurethane film, and/or an aqueous polyurethane obtained from such an oxyethylene structure-containing polycarbonate polyol tends to have better endurance.

(Hydroxy value)

The lower limit of the hydroxy value of the oxyethylene structure-containing polycarbonate polyol of the present embodiment is 10 mg-KOH/g or more, preferably 15 mg-KOH/g or more, more preferably 20 mg-KOH/g or more, further preferably 25 mg-KOH/g or more, still further preferably 30 mg-KOH/g or more, particularly preferably 35 mg-KOH/g or more, extremely preferably 40 mg-KOH/g or more. The upper limit thereof is 400 mg-KOH/g or less, preferably 350 mg-KOH/g or less, more preferably 300 mg-KOH/g or less, further preferably 275 mg-KOH/g or less, still further preferably 250 mg-KOH/g or less, particularly preferably 200 mg-KOH/g or less, extremely preferably 150 mg-KOH/g or less. The lower limit and the upper limit may be appropriately combined to define a numeric range. The range of the hydroxy value may be, for example, 10 to 400 mg-KOH/g, 15 to 350 mg-KOH/g, 20 to 300 mg-KOH/g, 25 to 275 mg-KOH/g, 30 to 250 mg-KOH/g, 35 to 200 mg-KOH/g, or 40 to 150 mg-KOH/g. When the hydroxy value of the oxyethylene structure-containing polycarbonate polyol falls within the range described above, stability of an aqueous dispersion and compatibility with ether polyol tend to be excellent. Furthermore, a coating material composition obtained from such an oxyethylene structure-containing polycarbonate polyol tends to have better drying properties, and a coating film, a polyurethane film, and/or an aqueous polyurethane obtained therefrom tends to have better endurance.

Examples of the method for controlling the hydroxy value of the oxyethylene structure-containing polycarbonate polyol of the present embodiment within the range described above include, but are not particularly limited to, a method of

adding starting materials polycarbonate polyol and polyvalent hydroxy compound having a structure represented by the formula (B) such that the hydroxy value falls within the range described above in the production of the oxyethylene structure-containing polycarbonate polyol, and a control method of adding and/or extracting a polyvalent hydroxy compound in the production of the oxyethylene structure-containing polycarbonate polyol.

In the present embodiment, the hydroxy value can be calculated by use of a method described in Examples mentioned later.

(R)

In the structure represented by the formula (A), R is a divalent aliphatic hydrocarbon group optionally containing a heteroatom and/or a divalent aromatic hydrocarbon group optionally containing a heteroatom. The aliphatic hydrocarbon group may be in any of linear, branched, and cyclic shapes. A plurality of R moieties are the same as or different from each other.

When R is a divalent linear aliphatic hydrocarbon group optionally containing a heteroatom, the lower limit of the molecular weight of R is preferably 10 or higher, more preferably 20 or higher. The upper limit of the molecular weight of R is preferably 3000 or lower, more preferably 2500 or lower, further preferably 2200 or lower. The range of the molecular weight of R may be, for example, 10 to 3000, 20 to 2500, or 20 to 2200.

When R is, for example, an ethylene group ($-CH_2-CH_2-$), the molecular weight of R is $(12 + 1 \times 2) + (12 + 1 \times 2) = 28$.

When R is a divalent linear aliphatic hydrocarbon group optionally containing a heteroatom, specific examples thereof include, but are not particularly limited to, a methylene group, an ethylene group, a propylene group, a butylene group, a pentylene group, a hexylene group, a heptylene group, an octylene group, a nonylene group, a decylene group, an oxyethylene group, an oxytetramethylene group, a polyoxyethylene group, a polyoxytetramethylene group, a fluoroalkyl group, and a perfluoroalkyl group. Among them, a methylene group, an ethylene group, a propylene group, a butylene group, a pentylene group, a hexylene group, a heptylene group, an octylene group, a nonylene group, and a decylene group are preferred, and a methylene group, an ethylene group, a propylene group, and a butylene group are more preferred, from the viewpoint of versatility.

When R is a divalent branched aliphatic hydrocarbon group optionally containing a heteroatom, the lower limit of the molecular weight of R is preferably 10 or higher, more preferably 20 or higher. The upper limit of the molecular weight of R is preferably 3000 or lower, more preferably 2500 or lower, further preferably 2200 or lower. The range of the molecular weight of R may be, for example, 10 to 3000, 20 to 2500, or 20 to 2200.

When R is a divalent branched aliphatic hydrocarbon group optionally containing a heteroatom, specific examples thereof include, but are not particularly limited to, an isopropylene group, an isobutylene group, a tert-butylene group, an isopentylene group, a 2,2-dimethyltrimethylene group, an isohexylene group, an isoheptylene group, an isooctylene group, an oxy-1-methylethylene group, an oxy-2,2-dimethyltrimethylene group, and a polyoxy-1-methylethylene group. Among them, an isopropylene group, an isobutylene group, an isopentylene group, a 2,2-dimethyltrimethylene group, an isohexylene group, and an oxy-1-methylethylene group are preferred from the viewpoint of versatility.

When R is a divalent cyclic aliphatic hydrocarbon group optionally containing a heteroatom, the lower limit of the molecular weight of R is preferably 10 or higher, more preferably 20 or higher, further preferably 30 or higher. The upper limit of the molecular weight of R is preferably 3000 or lower, more preferably 2500 or lower, further preferably 2200 or lower. The range of the molecular weight of R may be, for example, 10 to 3000, 20 to 2500, or 30 to 2200.

When R is a divalent cyclic aliphatic hydrocarbon group optionally containing a heteroatom, specific examples thereof include, but are not particularly limited to, a cyclobutylene group, a cyclopentylene group, a cyclohexylene group, and a cycloheptylene group.

R may be a divalent aromatic hydrocarbon group optionally containing a heteroatom. When R is a divalent aromatic hydrocarbon group optionally containing a heteroatom, the lower limit of the molecular weight of R is preferably 50 or higher, more preferably 60 or higher, further preferably 70 or higher. The upper limit of the molecular weight of R is preferably 3000 or lower, more preferably 2500 or lower, further preferably 2200 or lower. The range of the molecular weight of R may be, for example, 50 to 3000, 60 to 2500, or 70 to 2200.

Among others, R is preferably a divalent linear, branched or cyclic aliphatic hydrocarbon group optionally containing a heteroatom with a lower limit of R molecular weight of 10 or higher, more preferably a divalent linear aliphatic hydrocarbon group optionally containing a heteroatom with a lower limit of a R molecular weight of 20 or higher, or a divalent branched aliphatic hydrocarbon group optionally containing a heteroatom with a lower limit of a R molecular weight of 20 or higher, further preferably a divalent linear aliphatic hydrocarbon group having a R molecular weight of 10 or higher, still further preferably a divalent linear aliphatic hydrocarbon group having a R molecular weight of 20 or higher. R is preferably a divalent linear, branched or cyclic aliphatic hydrocarbon group optionally containing a heteroatom with a upper limit of R molecular weight of 3000 or lower, more preferably a divalent linear aliphatic hydrocarbon group optionally containing a heteroatom with a upper limit of a R molecular weight of 2500 or lower, or a divalent branched aliphatic

hydrocarbon group optionally containing a heteroatom with a upper limit of a R molecular weight of 2500 or lower, further preferably a divalent linear aliphatic hydrocarbon group with a upper limit of a R molecular weight of 2000 or lower, still further preferably a divalent linear aliphatic hydrocarbon group with a upper limit of a R molecular weight of 1500 or lower, particularly preferably a divalent linear aliphatic hydrocarbon group with a upper limit of a R molecular weight of 1000 or lower.

($R^1$)

In the structure represented by the formula (A), $R^1$ is hydrogen or an aliphatic hydrocarbon group having 1 to 5 carbon atoms. The aliphatic hydrocarbon group may be in any of linear, branched, and cyclic shapes. A plurality of $R^1$ moieties are the same as or different from each other.

Specific examples of the aliphatic hydrocarbon group represented by $R^1$ include, but are not particularly limited to, a methyl group, an ethyl group, a propyl group, a butyl group, a pentyl group, an isopropyl group, an isobutyl group, a tert-butyl group, and an isopentyl group.

Among them, $R^1$ is preferably hydrogen, a methyl group, an ethyl group, a propyl group, a butyl group, a pentyl group, an isopropyl group, or an isobutyl group, more preferably hydrogen, a methyl group, an ethyl group, a propyl group, or a butyl group, further preferably hydrogen, a methyl group, an ethyl group, or a propyl group, still further preferably hydrogen, a methyl group, or an ethyl group, particularly preferably hydrogen or a methyl group, particularly preferably hydrogen.

(Expression (i))

The structural unit represented by the formula (A) has endurance, the structural unit represented by the formula (B) has hydrophilicity, and the structure represented by the formula (BB) has hydrophilicity and compatibility with ether polyol. On the other hand, the structural unit represented by the formula (A) tends to reduce hydrophobicity and compatibility with ether polyol, the structural unit represented by the formula (B) tends to reduce hydrophilicity due to conformational change by heating, and the structure represented by the formula (BB) tends to have lower hydrophilicity than that of the formula (B).

Thus, for the oxyethylene structure-containing polycarbonate polyol excellent in stability of an aqueous dispersion and compatibility with ether polyol, the structural unit represented by the formula (A), the structural unit represented by the formula (B), and the structural unit represented by the formula (BB) are essential, and these structural units need to fall within a given range, i.e., the range of a value obtained according to the expression (i) needs to be the range described above.

The case where the value obtained according to the expression (i) is less than the lower limit of the range described above is, for example, the case where the amount of the structural unit represented by the formula (BB) is small. In this case, the oxyethylene structure-containing polycarbonate polyol tends to have reduced stability of an aqueous dispersion and compatibility with ether polyol. The case where the value obtained according to the expression (i) exceeds the upper limit of the range described above is, for example, the case where the amount of the structural unit represented by the formula (B) is small. In this case, the oxyethylene structure-containing polycarbonate polyol tends to have low hydrophilicity and reduced dispersibility in water. The case where the value obtained according to the expression (i) exceeds the upper limit of the range described above is, for example, the case where the amount of the structural unit represented by the formula (A) is small. In this case, the oxyethylene structure-containing polycarbonate polyol tends to have reduced endurance.

$$\left( \frac{BB}{A} \div \frac{B}{A+B} \right) \times Mn \quad \cdots (i)$$

In the expression (i), A is a molar quantity of the structural unit represented by the formula (A), B is a molar quantity of the structural unit represented by the formula (B), and BB is a molar quantity of the structural unit represented by the formula (BB). The molar ratio of [BB / A] and the molar ratio of [B / (A + B)] in the expression (i) can be measured by nuclear magnetic resonance (NMR) measurement described in Examples mentioned later.

In the expression (i), Mn represents a number-average molecular weight of the oxyethylene structure-containing polycarbonate polyol and can be measured by GPC measurement described in Examples mentioned later.

The range of the value obtained according to the expression (i) is 150.0 to 400.0. The lower limit of the value obtained according to the expression (i) is preferably 155.0 or higher, more preferably 160.0 or higher, further preferably 165.0 or higher. The upper limit thereof is preferably 350.0 or lower, more preferably 300.0 or lower, further preferably

275.0 or lower. The lower limit and the upper limit may be appropriately combined to define a numeric range. The range of the value obtained according to the expression (i) may be, for example, 155.0 to 350.0, 160.0 to 300.0, or 165.0 to 275.0. When the value obtained according to the expression (i) falls within the range described above, stability of an aqueous dispersion and compatibility with ether polyol tend to be excellent.

(Number-average molecular weight (Mn))

The lower limit of the number-average molecular weight (Mn) of the oxyethylene structure-containing polycarbonate polyol of the present embodiment is preferably 300 or higher, more preferably 400 or higher, further preferably 500 or higher, still further preferably 700 or higher, particularly preferably 900 or higher, particularly preferably 1000 or higher. The upper limit of the number-average molecular weight (Mn) of the oxyethylene structure-containing polycarbonate polyol of the present embodiment is preferably 10000 or lower, more preferably 8000 or lower, further preferably 5000 or lower, still further preferably 4500 or lower, particularly preferably 4000 or lower, more particularly preferably 3800 or lower, extremely preferably 3500 or lower, more extremely preferably 3200 or lower. The lower limit and the upper limit may be appropriately combined to define a numeric range. The range of the number-average molecular weight of the oxyethylene structure-containing polycarbonate polyol may be, for example, 300 to 10000, 400 to 8000, 500 to 5000, 700 to 4500, 900 to 4000, 1000 to 3800, 1000 to 3500, or 1000 to 3200.

When the number-average molecular weight (Mn) falls within the range described above, the oxyethylene structure-containing polycarbonate polyol of the present embodiment is excellent in compatibility with ether polyol. Furthermore, a coating material, a polyurethane, and/or an aqueous polyurethane obtained using such an oxyethylene structure-containing polycarbonate polyol tends to be much superior in endurance.

Examples of the method for controlling the number-average molecular weight (Mn) of the oxyethylene structure-containing polycarbonate polyol of the present embodiment within the range described above include, but are not particularly limited to, a method of adding starting materials polycarbonate polyol and polyvalent hydroxy compound having a structure represented by the formula (B) such that the number-average molecular weight (Mn) falls within the range described above in the production of the oxyethylene structure-containing polycarbonate polyol, and a control method of adding and/or extracting a polyvalent hydroxy compound in the production of the oxyethylene structure-containing polycarbonate polyol.

In the present embodiment, the number-average molecular weight (Mn) of the oxyethylene structure-containing polycarbonate polyol can be calculated by GPC measurement described in Examples mentioned later.

(Molecular weight distribution (Mw/Mn))

The lower limit of the molecular weight distribution (Mw/Mn) of the oxyethylene structure-containing polycarbonate polyol of the present embodiment is preferably 1.50 or more, more preferably 1.60 or more, further preferably 1.70 or more, still further preferably 1.80 or more, particularly preferably 1.90 or more. The upper limit thereof is preferably 5.00 or less, more preferably 4.00 or less, further preferably 3.50 or less, still further preferably 2.75 or less, particularly preferably 2.50 or less. The lower limit and the upper limit may be appropriately combined to define a numeric range. The range of the molecular weight distribution of the oxyethylene structure-containing polycarbonate polyol may be, for example, 1.50 to 5.00, 1.60 to 4.00, 1.70 to 3.50, 1.80 to 2.75, or 1.90 to 2.50.

When the molecular weight distribution (Mw/Mn) falls within the range described above, the oxyethylene structure-containing polycarbonate polyol of the present embodiment is excellent in stability of an aqueous dispersion and compatibility with ether polyol. A coating material composition obtained using such an oxyethylene structure-containing polycarbonate polyol tends to be much superior in flexibility and chemical resistance, and a polyurethane and/or an aqueous polyurethane obtained using such an oxyethylene structure-containing polycarbonate polyol tends to be much superior in flexibility and chemical resistance.

Examples of the method for controlling the molecular weight distribution (Mw/Mn) of the oxyethylene structure-containing polycarbonate polyol of the present embodiment within the range described above include, but are not particularly limited to, a method of adding starting materials polycarbonate polyol and polyvalent hydroxy compound having a structure represented by the formula (B) such that the molecular weight distribution (Mw/Mn) falls within the range described above in the production of the oxyethylene structure-containing polycarbonate polyol, and a control method of adding and/or extracting a polyvalent hydroxy compound in the production of the oxyethylene structure-containing polycarbonate polyol.

In the present embodiment, the number-average molecular weight (Mn) and weight-average molecular weight (Mw) of the oxyethylene structure-containing polycarbonate polyol can be calculated by GPC measurement described in Examples mentioned later. The molecular weight distribution (Mw/Mn) can be determined from the calculated number-average molecular weight (Mn) and weight-average molecular weight (Mw) according to the following expression (II):

Molecular weight distribution (Mw/Mn) = Weight-average molecular weight (Mw) / Number-average molecular weight (Mn) (II)

The lower limit of the average number of carbon atoms of a polyvalent hydroxy compound except for a polyvalent hydroxy compound having an oxyethylene structure among polyvalent hydroxy compounds obtained by the hydrolysis of the oxyethylene structure-containing polycarbonate polyol of the present embodiment is preferably 2.0 or more, more preferably 2.5 or more, further preferably 3.0 or more, still further preferably 3.2 or more, particularly preferably 3.5 or more, more particularly preferably 3.8 or more, extremely preferably 4.0 or more. The upper limit thereof is preferably 15.0 or less, more preferably 12.0 or less, further preferably 10.0 or less, still further preferably 8.0 or less, particularly preferably 6.5 or less, more particularly preferably 6.0 or less, extremely preferably 5.5 or less, more extremely preferably 5.2 or less. The lower limit and the upper limit may be appropriately combined to define a numeric range. The range of the average number of carbon atoms of a polyvalent hydroxy compound (except for a polyvalent hydroxy compound having an oxyethylene structure) may be, for example, 2.0 to 15.0, 2.5 to 12.0, 3.0 to 10.0, 3.2 to 8.0, 3.5 to 6.5, 3.8 to 6.0, 4.0 to 5.5, or 4.0 to 5.2.

When the average number of carbon atoms of a polyvalent hydroxy compound (except for a polyvalent hydroxy compound having an oxyethylene structure) falls within the range described above, the oxyethylene structure-containing polycarbonate polyol of the present embodiment is excellent in flexibility and endurance. A coating material composition obtained using such an oxyethylene structure-containing polycarbonate polyol tends to be much superior in balance between flexibility and endurance, and a polyurethane and/or an aqueous polyurethane obtained using such an oxyethylene structure-containing polycarbonate polyol tends to be much superior in flexibility and endurance.

A polyvalent hydroxy compound (except for a polyvalent hydroxy compound having an oxyethylene structure) obtained by the hydrolysis of the oxyethylene structure-containing polycarbonate polyol of the present embodiment preferably comprises at least one selected from the group consisting of 1,2-propanediol, 1,3-propanediol, 2-methyl-1,3-propanediol, 1,4-butanediol, 1,5-pentanediol, 3-methyl-1,5-pentanediol, and 1,6-hexanediol, more preferably comprises at least one selected from the group consisting of 1,3-propanediol, 2-methyl-1,3-propanediol, 1,4-butanediol, 1,5-pentanediol, 3-methyl-1,5-pentanediol, and 1,6-hexanediol, further preferably comprises at least one selected from the group consisting of 1,3-propanediol, 2-methyl-1,3-propanediol, and 1,4-butanediol, and still further preferably comprises at least one selected from the group consisting of 1,3-propanediol and 1,4-butanediol, from the viewpoint of improvement in chemical resistance.

The lower limit of the number-average molecular weight of a polyvalent hydroxy compound having an oxyethylene structure among polyvalent hydroxy compounds obtained by the hydrolysis of the oxyethylene structure-containing polycarbonate polyol of the present embodiment is preferably 300 or more, more preferably 400 or more, further preferably 500 or more, still further preferably 600 or more, particularly preferably 700 or more, more particularly preferably 800 or more, extremely preferably 900 or more. The upper limit thereof is preferably 3000 or less, more preferably 2800 or less, further preferably 2500 or less, still further preferably 2200 or less, particularly preferably 2000 or less, more particularly preferably 1800 or less, extremely preferably 1500 or less, more extremely preferably 1300 or less. The lower limit and the upper limit may be appropriately combined to define a numeric range. The range of the number-average molecular weight of a polyvalent hydroxy compound having an oxyethylene structure may be, for example, 300 to 3000, 400 to 2800, 500 to 2500, 600 to 2200, 700 to 2000, 800 to 1800, 900 to 1500, or 900 to 1300.

When the number-average molecular weight of a polyvalent hydroxy compound having an oxyethylene structure falls within the range described above, the oxyethylene structure-containing polycarbonate polyol of the present embodiment is excellent in stability of an aqueous dispersion and compatibility with ether polyol. A coating material composition obtained using such an oxyethylene structure-containing polycarbonate polyol tends to be much superior in balance between flexibility and chemical resistance, and a polyurethane and/or an aqueous polyurethane obtained using such an oxyethylene structure-containing polycarbonate polyol tends to be much superior in flexibility and chemical resistance.

The polyvalent hydroxy compound having an oxyethylene structure is preferably polyethylene glycol.

The oxyethylene structure-containing polycarbonate polyol of the present embodiment can have a hydrophilic structure other than the oxyethylene structure. Examples of the hydrophilic structure include, but are not particularly limited to, nonionic hydrophilic groups, anionic hydrophilic groups, and cationic hydrophilic groups. Among them, a nonionic hydrophilic group and an anionic hydrophilic group are preferred from the viewpoint of versatility. Specific examples of the nonionic hydrophilic group include, but are not particularly limited to, a glycoside group. Specific examples of the anionic hydrophilic group include, but are not particularly limited to, a sulfonic acid group and a carboxyl group.

The lower limit of the content of the hydrophilic structure in the oxyethylene structure-containing polycarbonate polyol is not particularly limited. Preferably, the hydrophilic structure is contained so as to attain △ or ○ in the evaluation of stability of an aqueous dispersion described in Examples mentioned later. More preferably, the hydrophilic structure is contained so as to attain ○ in the evaluation of water dispersibility described in Examples mentioned later. The upper limit thereof is preferably 50% by mol or less, more preferably 35% by mol or less, further preferably 30% by mol or less, still

further preferably 25% by mol or less, particularly preferably 20% by mol or less, more particularly preferably 15% by mol or less, extremely preferably 10% by mol or less.

When the content of the hydrophilic structure in the oxyethylene structure-containing polycarbonate polyol falls within the range described above, the oxyethylene structure-containing polycarbonate polyol of the present embodiment tends to be dispersible in water. A coating material composition and a polyurethane obtained using such an oxyethylene structure-containing polycarbonate polyol tend to be excellent in endurance.

The oxyethylene structure-containing polycarbonate polyol of the present embodiment is preferably capable of being dispersed in water. When the oxyethylene structure-containing polycarbonate polyol of the present embodiment is capable of being dispersed in water, an aqueous coating material composition and/or an aqueous polyurethane obtained using the oxyethylene structure-containing polycarbonate polyol tends to have favorable stability.

The capability of the oxyethylene structure-containing polycarbonate polyol of being dispersed in water can be determined from water dispersibility described in Examples mentioned later.

[Method for producing oxyethylene structure-containing polycarbonate polyol]

The oxyethylene structure-containing polycarbonate polyol of the present embodiment can be obtained, for example, through the reaction of a polycarbonate polyol with a polyvalent hydroxy compound having a structure represented by the formula (B) in the presence of a transesterification reaction catalyst.

If too large an amount of the catalyst remains in the oxyethylene structure-containing polycarbonate polyol, the oxyethylene structure-containing polycarbonate polyol may become white turbid or may be easily stained by heating. Such a catalyst may inhibit reaction in producing a polyurethane or may accelerate the reaction too much. Too small an amount of the catalyst is not preferred because the progression of the reaction tends to be slowed.

Hence, the amount of the catalyst remaining in the oxyethylene structure-containing polycarbonate polyol is not particularly limited. The lower limit of its content based on a catalyst metal is preferably 0.00001% by mass or more, more preferably 0.00005% by mass or more, further preferably 0.0001% by mass or more, still further preferably 0.0005% by mass or more. The upper limit thereof is preferably 0.1% by mass or less, more preferably 0.05% by mass or less, further preferably 0.03% by mass or less, still further preferably 0.02% by mass or less, particularly preferably 0.015% by mass or less, more particularly preferably 0.01% by mass or less, extremely preferably 0.005% by mass or less.

The chromaticity (APHA) of each starting material for use in producing the oxyethylene structure-containing polycarbonate polyol of the present embodiment is preferably 100 or less, more preferably 80 or less, further preferably 50 or less, still further preferably 30 or less, particularly preferably 20 or less. When the APHA of the starting material is equal to or less than the value described above, the resulting oxyethylene structure-containing polycarbonate polyol tends to be excellent in APHA.

(Polyvalent hydroxy compound having structure represented by formula (B))

Examples of the polyvalent hydroxy compound having a structure represented by the formula (B) for use in producing the oxyethylene structure-containing polycarbonate polyol of the present embodiment include, but are not particularly limited to, diethylene glycol, triethylene glycol, tetraethylene glycol, heptaethylene glycol, hexaethylene glycol, heptaethylene glycol, and "polyethylene glycol" series manufactured by FUJIFILM Wako Pure Chemical Corp.

[Production conditions for oxyethylene structure-containing polycarbonate polyol]

For the production of the oxyethylene structure-containing polycarbonate polyol of the present embodiment, a transesterification reaction catalyst can be used.

Examples of the transesterification reaction catalyst include, but are not particularly limited to, alkali metals and alkaline earth metals, and alcoholates thereof, hydrides thereof, oxides thereof, amides thereof, hydroxides thereof and salts thereof.

Examples of the salts of the alkali metal and the alkaline earth metal include, but are not particularly limited to, carbonate, nitrogen-containing borate, and basic salts with organic acids.

Examples of the alkali metal include, but are not particularly limited to, lithium, sodium, and potassium.

Examples of the alkaline earth metal include, but are not particularly limited to, magnesium, calcium, strontium, and barium.

Examples of the transesterification catalyst using a metal other than alkali metals and alkaline earth metals include, but are not particularly limited to, metals other than alkali metals and alkaline earth metals, and salts thereof, alcoholates thereof, and organic compounds containing the metals.

Specific examples of the metal other than alkali metals and alkaline earth metals include, but are not particularly limited to, aluminum, titanium, vanadium, chromium, manganese, iron, cobalt, nickel, copper, zinc, gallium, germanium,

zirconium, niobium, molybdenum, ruthenium, rhodium, palladium, silver, indium, tin, antimony, tungsten, rhenium, osmium, iridium, platinum, gold, thallium, lead, bismuth, and ytterbium.

One of these transesterification catalysts can be used alone, or two or more thereof can be used in combination.

Among others, the transesterification reaction catalyst is preferably at least one metal selected from the group consisting of lithium, sodium, potassium, magnesium, calcium, titanium, manganese, zirconium, tin, lead and ytterbium, or a salt thereof, an alkoxide thereof, or an organic compound containing the metal, more preferably at least one metal selected from the group consisting of lithium, magnesium, calcium, titanium, manganese, ytterbium, tin, zinc and zirconium, further preferably at least one metal selected from the group consisting of lithium, magnesium, calcium, titanium, manganese and ytterbium, still further preferably at least one metal selected from the group consisting of lithium, magnesium, calcium, titanium and manganese, particularly preferably at least one metal selected from the group consisting of lithium, calcium, titanium and manganese, more particularly preferably at least one metal selected from the group consisting of lithium, titanium and manganese, more particularly preferably at least one metal selected from the group consisting of titanium and manganese, because transesterification reaction to obtain the oxyethylene structure-containing polycarbonate polyol is more favorably performed, and use of the resulting oxyethylene structure-containing polycarbonate polyol has less influence on urethane reaction.

Specific examples of the preferred transesterification catalyst include organic compounds of titanium, organic compounds of magnesium, organic compounds of zinc, organic compounds of ytterbium, organic compounds of zirconium, and organic compounds of manganese.

Examples of the organic compound of titanium include, but are not particularly limited to, titanium tetra-n-butoxide, titanium tetra-n-propoxide, and titanium tetraisopropoxide.

Examples of the organic compound of magnesium include, but are not particularly limited to, magnesium acetate, magnesium(II) acetylacetonate, and 2,2,6,6-tetramethyl-3,5-heptanedionatomagnesium(II) dihydrate.

Examples of the organic compound of zinc include, but are not particularly limited to, zinc acetate, zinc(II) acetylacetonate, and 2,2,6,6-tetramethyl-3,5-heptanedionatozinc(II).

Examples of the organic compound of ytterbium include, but are not particularly limited to, ytterbium(III) isopropoxide, ytterbium(III) trifluoromethanesulfonate, tris(cyclopentadienyl)ytterbium(III), and acetylacetonatoytterbium(III) hydrate.

Examples of the organic compound of zirconium include, but are not particularly limited to, zirconium(IV) acetylacetone, zirconium(IV) tetrapropoxide, zirconium(IV) tetrabutoxide, and zirconium(IV) acetylacetonate.

Examples of the organic compound of manganese include, but are not particularly limited to, manganese(II) acetate and manganese(II) acetylacetonate.

The lower limit of the amount of the transesterification reaction catalyst used is preferably 0.00001% by mass or more, more preferably 0.0001% by mass or more, based on the total mass of the starting materials. The upper limit thereof is preferably 0.1% by mass or less, more preferably 0.05% by mass or less, further preferably 0.025% by mass or less, still further preferably 0.015% by mass or less, particularly preferably 0.01% by mass or less.

Specifically, the transesterification reaction can be carried out by mixing starting materials, and stirring the mixture under heating.

The temperature of the transesterification reaction is not particularly limited and is preferably 120°C or higher, more preferably 140°C or higher, in terms of the lower limit and preferably 250°C or lower, more preferably 200°C or lower, in terms of the upper limit.

When the reaction temperature is equal to or higher than the lower limit value described above, the transesterification reaction can be performed in a shorter time, leading to excellent cost efficiency. When the reaction temperature is equal to or lower than the upper limit value described above, the resulting oxyethylene structure-containing polycarbonate polyol can be more effectively prevented from being stained.

The reaction pressure of the transesterification reaction is not particularly limited and is preferably atmospheric pressure or higher and 1 MPa or lower. When the reaction pressure falls within the range described above, the reaction can be more conveniently carried out. In the case of using an auxiliary material, the transesterification reaction can be more efficiently accelerated at a pressure increased to some extent in consideration of vapor pressure thereof, etc.

The progression and completion of the transesterification reaction can be confirmed by NMR measurement described in Examples mentioned later. As the transesterification reaction of the starting materials polycarbonate polyol and polyvalent hydroxy compound having a structure represented by the formula (B) progresses, a value of the expression (i) is increased over time because a structure represented by the formula (BB) is formed. The value of the expression (i) can be confirmed to reach the defined range.

In the method for producing the oxyethylene structure-containing polycarbonate polyol, for example, the step of dehydrating the starting materials used may be performed as pretreatment before the transesterification reaction described above.

In the method for producing the oxyethylene structure-containing polycarbonate polyol, for example, the step of adding the aforementioned catalyst poison for the transesterification reaction catalyst may be performed as aftertreatment

after the transesterification reaction described above.

[Polycarbonate polyol]

The polycarbonate polyol for use in producing the oxyethylene structure-containing polycarbonate polyol of the present embodiment is not particularly limited and can be obtained by a method for producing a polycarbonate polyol mentioned later. Alternatively, a commercially available product may be used. Examples thereof include, but are not particularly limited to, "DURANOL (trade name)" series T6002, T6001, T5652, T5651, T5650J, T5650E, G4672, T4672, T4671, G3452, G3450J, GE502, and GE501 manufactured by Asahi Kasei Corp.

[Method for producing polycarbonate polyol]

A method for producing the polycarbonate polyol for use in the production of the oxyethylene structure-containing polycarbonate polyol of the present embodiment is not particularly limited, and a method known in the art may be adopted. The polycarbonate polyol can be obtained, for example, through the reaction of a carbonate compound with a polyvalent hydroxy compound in the presence of a transesterification catalyst.

(Carbonate compound)

Examples of the carbonate compound for use in the production of the polycarbonate polyol include, but are not limited to, alkylene carbonate, dialkyl carbonate, and diaryl carbonate.

Examples of the alkylene carbonate include, but are not particularly limited to, ethylene carbonate, trimethylene carbonate, 1,2-propylene carbonate, 1,2-butylene carbonate, 1,3-butylene carbonate, and 1,2-pentylene carbonate.

Examples of the dialkyl carbonate include, but are not particularly limited to, dimethyl carbonate, diethyl carbonate, dipropyl carbonate, and dibutyl carbonate.

Examples of the diaryl carbonate include, but are not particularly limited to, diphenyl carbonate.

Among others, the carbonate compound for use in the production of the polycarbonate polyol is preferably dimethyl carbonate, diethyl carbonate, ethylene carbonate, or diphenyl carbonate, more preferably dimethyl carbonate, ethylene carbonate, or diphenyl carbonate, further preferably ethylene carbonate or diphenyl carbonate, still further preferably ethylene carbonate.

(Polyvalent hydroxy compound)

Examples of the polyvalent hydroxy compound for use in the production of the polycarbonate polyol include, but are not limited to, linear polyvalent hydroxy compounds, branched polyvalent hydroxy compounds, cyclic polyvalent hydroxy compounds, and polyvalent hydroxy compounds having an aromatic ring.

Examples of the linear polyvalent hydroxy compounds include, but are not particularly limited to, ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, diethylene glycol, triethylene glycol, polyethylene glycol, and polytetraethylene glycol.

Examples of the branched polyvalent hydroxy compound include, but are not particularly limited to, 2-methyl-1,8-octanediol, neopentyl glycol, 2-ethyl-1,6-hexanediol, 2-methyl-1,3-propanediol, 3-methyl-1,5-pentanediol, 2,4-dimethyl-1,5-pentanediol, 2,4-diethyl-1,5-pentanediol, trimethylolpropane, pentaerythritol, and polypropylene glycol.

Examples of the cyclic polyvalent hydroxy compound include, but are not particularly limited to, 1,3-cyclohexanediol, 1,4-cyclohexanediol, 1,4-cyclohexanedimethanol, and 2-bis(4-hydroxycyclohexyl)-propane isosorbide.

(Production conditions for polycarbonate polyol)

For the production of the polycarbonate polyol, a transesterification reaction catalyst can be used.

Examples of the transesterification reaction catalyst include, but are not particularly limited to, alkali metals and alkaline earth metals, and alcoholates thereof, hydrides thereof, oxides thereof, amides thereof, hydroxides thereof and salts thereof.

Examples of the salts of the alkali metal and the alkaline earth metal include, but are not particularly limited to, carbonate, nitrogen-containing borate, and basic salts with organic acids.

Examples of the alkali metal include, but are not particularly limited to, lithium, sodium, and potassium.

Examples of the alkaline earth metal include, but are not particularly limited to, magnesium, calcium, strontium, and barium.

Examples of the transesterification catalyst using a metal other than alkali metals and alkaline earth metals

include, but are not particularly limited to, metals other than alkali metals and alkaline earth metals, and salts thereof, alcoholates thereof, and organic compounds containing the metals.

Specific examples of the metal other than alkali metals and alkaline earth metals include, but are not particularly limited to, aluminum, titanium, vanadium, chromium, manganese, iron, cobalt, nickel, copper, zinc, gallium, germanium, zirconium, niobium, molybdenum, ruthenium, rhodium, palladium, silver, indium, tin, antimony, tungsten, rhenium, osmium, iridium, platinum, gold, thallium, lead, bismuth, and ytterbium.

One of these transesterification catalysts can be used alone, or two or more thereof can be used in combination.

Among others, the transesterification reaction catalyst is preferably at least one metal selected from the group consisting of lithium, sodium, potassium, magnesium, calcium, titanium, manganese, zirconium, tin, lead and ytterbium, or a salt thereof, an alkoxide thereof, or an organic compound containing the metal, more preferably at least one metal selected from the group consisting of lithium, magnesium, calcium, titanium, manganese, ytterbium, tin, zinc and zirconium, further preferably at least one metal selected from the group consisting of lithium, magnesium, calcium, titanium, manganese and ytterbium, still further preferably at least one metal selected from the group consisting of lithium, magnesium, calcium, titanium and manganese, particularly preferably at least one metal selected from the group consisting of lithium, calcium, titanium and manganese, more particularly preferably at least one metal selected from the group consisting of lithium, titanium and manganese, more particularly preferably at least one metal selected from the group consisting of titanium and manganese, because transesterification reaction to obtain the polycarbonate polyol is more favorably performed, and use of the resulting polycarbonate polyol has less influence on urethane reaction.

Specific examples of the preferred transesterification catalyst include organic compounds of titanium, organic compounds of magnesium, organic compounds of zinc, organic compounds of ytterbium, organic compounds of zirconium, and organic compounds of manganese.

Examples of the organic compound of titanium include, but are not particularly limited to, titanium tetra-n-butoxide, titanium tetra-n-propoxide, and titanium tetraisopropoxide.

Examples of the organic compound of magnesium include, but are not particularly limited to, magnesium acetate, magnesium(II) acetylacetonate, and 2,2,6,6-tetramethyl-3,5-heptanedionatomagnesium(II) dihydrate.

Examples of the organic compound of zinc include, but are not particularly limited to, zinc acetate, zinc(II) acetylacetonate, and 2,2,6,6-tetramethyl-3,5-heptanedionatozinc(II).

Examples of the organic compound of ytterbium include, but are not particularly limited to, ytterbium(III) isopropoxide, ytterbium(III) trifluoromethanesulfonate, tris(cyclopentadienyl)ytterbium(III), and acetylacetonatoytterbium(III) hydrate.

Examples of the organic compound of zirconium include, but are not particularly limited to, zirconium(IV) acetylacetone, zirconium(IV) tetrapropoxide, zirconium(IV) tetrabutoxide, and zirconium(IV) acetylacetonate.

Examples of the organic compound of manganese include, but are not particularly limited to, manganese(II) acetate and manganese(II) acetylacetonate.

The lower limit of the amount of the transesterification reaction catalyst used is preferably 0.00001% by mass or more, more preferably 0.0001% by mass or more, based on the total mass of the starting materials. The upper limit thereof is preferably 0.1% by mass or less, more preferably 0.05% by mass or less, further preferably 0.025% by mass or less, still further preferably 0.015% by mass or less, particularly preferably 0.01% by mass or less.

The transesterification catalyst used in transesterification reaction is not consumed by the transesterification reaction when heat treatment is performed subsequently to the production of the polycarbonate polyol. Therefore, its amount can be calculated on the basis of the amount of the transesterification reaction catalyst used. In the case of using, for example, commercially available polycarbonate polyol, the amount of a metal of the transesterification reaction catalyst contained in the polycarbonate polyol is determined by ICP (inductively coupled plasma) measurement.

The polycarbonate polyol used in the present embodiment may be produced through the transesterification reaction of a polycarbonate polyol with a diol compound, or two or more types of polycarbonate polyols.

When the starting material polycarbonate polyol contains a catalyst poison for the transesterification reaction catalyst, etc. used in the production thereof, transesterification reaction usually tends to be less likely to progress. Hence, for the production of the polycarbonate polyol, the transesterification reaction catalyst described above can be newly added in a necessary amount.

On the other hand, when the starting material polycarbonate polyol contains no catalyst poison for the transesterification reaction catalyst, the transesterification reaction according to the present embodiment usually tends to be more likely to progress. However, in the case of, for example, further lowering a reaction temperature or further shortening a reaction time in the process of producing the polycarbonate polyol, the transesterification reaction catalyst can also be newly added in a necessary amount. In this case, the same transesterification reaction catalyst as that used in the production of the starting material polycarbonate polyol can be adopted.

Specifically, the transesterification reaction can be carried out by mixing starting materials, and stirring the mixture under heating.

The temperature of the transesterification reaction is not particularly limited and is preferably 120°C or higher,

more preferably 140°C or higher, in terms of the lower limit and preferably 250°C or lower, more preferably 200°C or lower, in terms of the upper limit.

When the reaction temperature is equal to or higher than the lower limit value described above, the transesterification reaction can be performed in a shorter time, leading to excellent cost efficiency. When the reaction temperature is equal to or lower than the upper limit value described above, the resulting polycarbonate polyol can be more effectively prevented from being stained.

The reaction pressure of the transesterification reaction is not particularly limited and is preferably atmospheric pressure or higher and 1 MPa or lower. When the reaction pressure falls within the range described above, the reaction can be more conveniently carried out. In the case of using an auxiliary material, the transesterification reaction can be more efficiently accelerated at a pressure increased to some extent in consideration of vapor pressure thereof, etc.

The progression and completion of the transesterification reaction can be confirmed by GPC measurement. As the transesterification reaction progresses, a peak derived from a starting material is decreased in height or area over time. The progression and completion can be confirmed from the disappearance of the peak.

In the method for producing the polycarbonate polyol, for example, the step of dehydrating the starting materials used may be performed as pretreatment before the transesterification reaction described above.

In the method for producing the polycarbonate polyol, for example, the step of adding the aforementioned catalyst poison for the transesterification reaction catalyst may be performed as aftertreatment after the transesterification reaction described above.

[Coating material]

The coating material of the present embodiment comprises the oxyethylene structure-containing polycarbonate polyol mentioned above. The coating material of the present embodiment is excellent in compatibility with ether polyol, flexibility, and endurance by comprising the oxyethylene structure-containing polycarbonate polyol mentioned above.

The coating material of the present embodiment is preferably an aqueous coating material. The aqueous coating material is a coating material containing a solvent or a dispersion medium composed mainly of water. When the coating material of the present embodiment is an aqueous coating material, volatile organic compound (VOC) emission tends to be reduced.

The coating material of the present embodiment may contain an additional component in addition to the oxyethylene structure-containing polycarbonate polyol mentioned above. Examples of the additional component include, but are not particularly limited to, curable compositions, polyhydric alcohol compounds, and polyols described in Japanese Patent Laid-Open No. 2018-012769, such as polyester polyol, acrylic polyol, polyether polyol, polyolefin polyol, and fluorine polyol.

The coating material (coating material composition) of the present embodiment can be supplemented with other additives, for example, a curing accelerator (catalyst), a flatting agent, an antisettling agent, a leveling agent, a filler, a dispersant, a flame retardant, a dye, an organic or inorganic pigment, a mold release agent, a rheology modifier, a plasticizer, an antioxidant, an ultraviolet absorber, a light stabilizer, an antifoaming agent, a colorant, and a solvent, according to various purposes, in addition to those described above. A coating material composition differing in nature, such as a soft-feel coating material and a clear coating material, can be obtained by appropriately containing these other additives.

The coating material of the present embodiment may be obtained using a polyurethane or an aqueous polyurethane mentioned later.

[Polyurethane]

The polyurethane of the present embodiment is obtained using the oxyethylene structure-containing polycarbonate polyol mentioned above. The polyurethane of the present embodiment obtained using the oxyethylene structure-containing polycarbonate polyol mentioned above is excellent in flexibility and endurance.

The aqueous polyurethane of the present embodiment is obtained using the oxyethylene structure-containing polycarbonate polyol mentioned above. The aqueous polyurethane of the present embodiment obtained using the oxyethylene structure-containing polycarbonate polyol mentioned above is excellent in stability of emulsion particles, flexibility, and endurance. The aqueous polyurethane means a polyurethane dispersion containing water as a dispersion medium.

Examples of the method for obtaining the polyurethane of the present embodiment include, but are not particularly limited to, a prepolymer method (two-step method) of synthesizing a NCO group-terminated prepolymer using the oxyethylene structure-containing polycarbonate polyol mentioned above and an isocyanate compound, and then extending the chain by the addition of a polyhydric alcohol or polyamine, and a one-shot method (one-step method) of polymerizing the oxyethylene structure-containing polycarbonate polyol mentioned above, an isocyanate compound and

a polyhydric alcohol and/or polyamine at the same time.

Examples of the method for obtaining the aqueous polyurethane of the present embodiment include, but are not particularly limited to, methods described in Examples of Japanese Patent Laid-Open No. 2017-71685.

[Leather]

The artificial leather of the present embodiment is obtained using the polyurethane or the aqueous polyurethane mentioned above. The artificial leather of the present embodiment obtained using the polyurethane or the aqueous polyurethane mentioned above is excellent in flexibility and endurance.

The synthetic leather of the present embodiment is obtained using the polyurethane or the aqueous polyurethane mentioned above. The synthetic leather of the present embodiment obtained using the polyurethane or the aqueous polyurethane mentioned above is excellent in flexibility and endurance.

[Coating film]

The coating film of the present embodiment is obtained from the coating material mentioned above. The coating film of the present embodiment obtained from the coating material mentioned above is excellent in flexibility, endurance, and coating film appearance in combined use with ether polyol.

Examples

Various physical property values, analysis methods, and measurement conditions of oxyethylene structure-containing polycarbonate polyols obtained in Examples and Comparative Examples mentioned later will be described below. For numeric values, such as chemical shift values of $^1$H-NMR, which vary depending on measurement objects, it is desirable to use a suitable value for each measurement object.

[Measurement of hydroxy value (OHV)]

The hydroxy value was measured by the following method.

A volumetric flask was used, and pyridine was added to 12.5 g of acetic anhydride so as to bring the amount to 50 mL, to prepare an acetylation reagent. In a 100 mL eggplant-shaped flask, 1.0 to 10.0 g of a sample was weighed. To the eggplant-shaped flask, 5 mL of the acetylation reagent and 10 mL of toluene were added with a whole pipette to obtain a solution. Then, a condenser was attached to the eggplant-shaped flask, and the solution was stirred and heated at 100°C for 1 hour. To the eggplant-shaped flask, 2.5 mL of distilled water was added with a whole pipette, and the obtained solution was further heated and stirred for 10 minutes. After cooling of the solution for 2 to 3 minutes, to the eggplant-shaped flask, 12.5 mL of ethanol was added, and 2 to 3 drops of phenolphthalein were added as an indicator, followed by titration with 0.5 mol/L ethanolic potassium hydroxide. Subsequently, in a 100 mL eggplant-shaped flask, 5 mL of the acetylation reagent, 10 mL of toluene and 2.5 mL of distilled water were placed, and heated and stirred for 10 minutes, followed by titration of the obtained solution in the same way as above (blank test). On the basis of the results, the hydroxy value was calculated according to the following expression (III):

$$\text{Hydroxy value (mg-KOH/g)} = \{(b - a) \times 28.05 \times f\} / e \qquad \text{(III)}$$

wherein a represents the amount of the sample titrated (mL); b represents the amount titrated (mL) in the blank test; e represents the amount of the sample (g); and f represents the factor of the titration solution.

[GPC measurement]

The number-average molecular weight (Mn) and weight-average molecular weight (Mw) of an oxyethylene structure-containing polycarbonate polyol were measured by GPC in accordance with the following method.

An oxyethylene structure-containing polycarbonate polyol polycarbonate polyol obtained in each of Examples and Comparative Examples mentioned later was used as a sample. The concentration of the measurement sample was adjusted to 0.5% by mass with tetrahydrofuran (hereinafter, referred to as THF). The number-average molecular weight (Mn) and weight-average molecular weight (Mw) based on standard polystyrene were measured using a GPC apparatus given below.

GPC apparatus: HLC-8320 manufactured by Tosoh Corp.
Analytical column: One column of TSKgel G4000H

One column of G3000H
Two columns of G2000H

Guard column: TSKgel guard column $H_{XL}$-H
Reference column: TSKgel SuperH-RC
Eluent: Tetrahydrofuran (THF)
Flow rate: 1.0 mL/min
Column temperature: 40°C
RI detector: RI (apparatus: built-in HLC-8320)
Calibration curve: Standard polystyrene (manufactured by Tosoh Corp.)

- F-40 (molecular weight: $4.27 \times 10^5$)
- F-20 (molecular weight: $1.90 \times 10^5$)
- F-10 (molecular weight: $9.64 \times 10^4$)
- F-4 (molecular weight: $3.79 \times 10^4$)
- F-2 (molecular weight: $1.81 \times 10^4$)
- F-1 (molecular weight: $1.02 \times 10^4$)
- A-5000 (molecular weight: $5.97 \times 10^3$)
- A-2500 (molecular weight: $2.63 \times 10^3$)
- A-500
- A-1000

The molecular weights of a dimer to a decamer were calculated from A-500 and A-1000.

Dimer (molecular weight: 266)
Trimer (molecular weight: 370)
Tetramer (molecular weight: 474)
Pentamer (molecular weight: 578)
Hexamer (molecular weight: 682)
Heptamer (molecular weight: 786)
Octamer (molecular weight: 890)
Nonamer (molecular weight: 994)
Decamer (molecular weight: 1098)
Calibration curve expression: Cubic polynomial

[Hydrolysis]

An oxyethylene structure-containing polycarbonate polyol obtained in each of Examples and Comparative Examples mentioned later was hydrolyzed by the following method.

In a 100 mL eggplant-shaped flask, 1 g of a sample was collected, and further, 30 g of ethanol and 4 g of potassium hydroxide were placed, followed by reaction at 100°C for 1 hour. After cooling to room temperature, 2 to 3 drops of phenolphthalein were added as an indicator to the eggplant-shaped flask, and the mixture was neutralized with hydrochloric acid. The eggplant-shaped flask was cooled for 1 hour or longer in a refrigerator. Then, a precipitated salt was filtered off to obtain a filtrate.

[Molar ratio of polyvalent hydroxy compound (except for polyvalent hydroxy compound having oxyethylene structure) after hydrolysis]

The molar ratio of a polyvalent hydroxy compound (except for a polyvalent hydroxy compound having an oxyethylene structure) after hydrolysis was measured by the following method.

The filtrate obtained by hydrolysis was analyzed by gas chromatography. The concentration of each polyvalent hydroxy compound was determined by preparing in advance a calibration curve from each known polyvalent hydroxy compound as a standard substance, and calculating % by weight from an area ratio obtained by gas chromatography (GC). The analysis was conducted using gas chromatography GC-2014 (manufactured by Shimadzu Corp.) with DB-WAX (manufactured by J&W Scientific Inc.) as a column and using a flame ionization detector (FID) as a detector. The temperature rise profile of the column involved holding at 60°C for 5 minutes followed by temperature rise to 250°C at 10°C/min. The molar ratio of a polyvalent hydroxy compound (except for a polyvalent hydroxy compound having an oxyethylene structure) was calculated from % by weight obtained by the gas chromatography and the molecular weight of

each polyvalent hydroxy compound.

[Number-average molecular weight of polyvalent hydroxy compound having oxyethylene structure after hydrolysis]

The number-average molecular weight of a polyvalent hydroxy compound having an oxyethylene structure after hydrolysis was analyzed by liquid chromatography-mass spectrometry (LC-MS) in accordance with the following procedures 1 to 4.

1. Ethanol is distilled off from the filtrate obtained by hydrolysis.
2. 4.5 mg of the resultant of 1 is weighed, and the volume is made up to 10 mL using acetonitrile, followed by filtration and subsequent LC-MS measurement using an apparatus and conditions given below.
3. The same measurement as in 2 is performed using a polyvalent hydroxy compound having an oxyethylene structure with a molecular weight similar to the results of 2.
4. When the analysis results of 2 and 3 compared are consistent with each other, the polyvalent hydroxy compound having an oxyethylene structure used in 3 is measured by GPC to determine the number-average molecular weight of the polyvalent hydroxy compound having an oxyethylene structure after hydrolysis.

Apparatus: Thermo Fisher Ultimate 3000/LTQ orbitrap XL
Column: Waters Xbridge C18 5 um 4.6 mm in diameter × 150 mm in length
Flow rate: 0.2 mL/min
Ionization method: ESI-positive
Injection volume: 1.0 uL
Eluent conditions:

[Table 1]

| Time (min) | Flow rate (mL/min) | A (Water) | B (Acetonitrile) |
|---|---|---|---|
| 0 | 0.2 | 20 | 80 |
| 14 | 0.2 | 20 | 80 |

[Average number of carbon atoms]

The average number of carbon atoms was calculated from the molar ratio of a polyvalent hydroxy compound (except for a polyvalent hydroxy compound having an oxyethylene structure) after hydrolysis according to the following expression (IV).

Σ [The number of carbon atoms of a polyvalent hydroxy compound (except for a polyvalent hydroxy compound having an oxyethylene structure) × Molar fraction of the polyvalent hydroxy compound] (IV)

For example, when 2-methyl-1,3-propanediol (92 mol%) and 1,6-hexanediol (8 mol%) are obtained as polyvalent hydroxy compounds as a result of the molar ratio of a polyvalent hydroxy compound (except for a polyvalent hydroxy compound having an oxyethylene structure) after hydrolysis, the average number of carbon atoms is $4 \times 0.92 + 6 \times 0.08 = 4.16$.

[NMR measurement]

The molar ratio of a structural unit represented by the formula (BB) to a structural unit represented by the formula (A) [BB / A] and the molar ratio of a structural unit represented by the formula (B) to the structural units represented by the formula (A) and the formula (B) [B / (A + B)] in the expression (i) were measured by nuclear magnetic resonance (NMR) as follows.

NMR apparatus: JEOL-ECZ500
Observation nucleus: $^1H$
Waiting time: 5 sec
Scan: 128 times
Solvent: $CDCl_3$
Measurement temperature: Room temperature

Chemical shift reference: TMS 0.00 ppm

In the measurement, integral values of signals given below were divided by the number of hydrogen, and the molar ratios [BB / A] and [B / (A + B)] were determined from the values.

A specific calculation method was as follows.

Amount of the structure represented by the formula (A): Integral value around 4.00 to 4.20 ppm (peak of a1 in the following formula A-1) / (The number of hydrogen of a1)

Amount of the structure represented by the formula (B): Integral value around 3.60 to 3.70 ppm (peak of b1 in the following formula B-1) / (The number of hydrogen of b1)

Amount of the structure represented by the formula (BB): Integral value around 4.25 to 4.30 ppm (peak of bb1 in the following formula BB-1) / (The number of hydrogen of bb1)

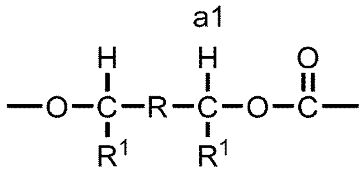 ・・・(A−1)

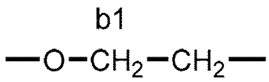 ・・・(B−1)

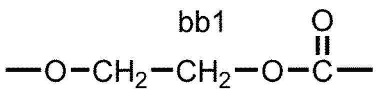 ・・・(BB−1)

The number of hydrogen of a1 was determined by identifying a polyvalent hydroxy compound (except for a polyvalent hydroxy compound having an oxyethylene structure) after hydrolysis.

For example, when 1,6-hexanediol (100 mol%) is obtained as a polyvalent hydroxy compound as a result of the molar ratio of a polyvalent hydroxy compound (except for a polyvalent hydroxy compound having an oxyethylene structure) after hydrolysis, the number of hydrogen of a1 is 2. For example, when 1,2-propanediol (100 mol%) is obtained as a polyvalent hydroxy compound as a result of the molar ratio of a polyvalent hydroxy compound (except for a polyvalent hydroxy compound having an oxyethylene structure) after hydrolysis, the number of hydrogen of a1 is 1.5. For example, when 1,6-hexanediol (60 mol%) and 1,2-propanediol (40 mol%) are obtained as polyvalent hydroxy compounds as a result of the molar ratio of a polyvalent hydroxy compound (except for a polyvalent hydroxy compound having an oxyethylene structure) after hydrolysis, the number of hydrogen of a1 is $2 \times 0.6 + 1.5 \times 0.4 = 1.8$.

When peaks overlapped with each other, the molar ratios were calculated by identifying each peak. The molar ratios [BB / A] and [B / (A + B)] can be calculated by identifying each peak as follows.

For example, the case will be described where a spectrum of Figure 1 was obtained when polycarbonate polyol was measured by NMR. The number-average molecular weight of the polycarbonate polyol was 1283 by GPC measurement. Polyvalent hydroxy compounds obtained by the hydrolysis of the polycarbonate polyol were identified and were consequently 1,6-hexanediol, 1,5-pentanediol, and polyethylene glycol (molecular weight: approximately 1000) with an average number of carbon atoms of 5.5.

The amount of the structure represented by the formula (A) is determined from (a1 integral value) / (the number of hydrogen of a1). The amount of the structure represented by the formula (B) is determined from [(b1 + a5) integral value - a6 integral value] / (the number of hydrogen of b1), though peaks of b1 and a5 overlap with each other. The amount of the structure represented by the formula (BB) is determined from (bb1 integral value) / (the number of hydrogen of bb1).

Amount of the structure represented by the formula

$$(A) = 151.142 / 2.0 = 75.571$$

Amount of the structure represented by the formula

$$(B) = [(83.706) - 30.306] / 2 = 26.7$$

Amount of the structure represented by the formula

$$(BB): 4.00 / 2 = 2.0$$

$$\text{Molar ratio } [BB / A] = 2.0 / 75.571 = 0.0265$$

Molar ratio [B / (A + B)] = 26.7 / (75.571 + 26.7) = 0.261

$$\text{Expression (i)} = 0.0265 / 0.261 \times 1283 = 130.3$$

[Hydrophilic structure]

The operation of [Water dispersibility] mentioned later was carried out to confirm whether a sample was dispersible in water. When the evaluation results were ○ or △, the sample was confirmed to have a hydrophilic structure. The hydrophilic structure was determined by the following method 1), 2) and/or 3).

1) The hydrophilic structure was determined from the structure of each starting material used.
2) The sample was subjected to mass spectrometry, FT-IR measurement, $^{1}$H-NMR measurement and/or $^{13}$C-NMR, and the hydrophilic structure was confirmed by identification from each spectrum thus obtained.
The analysis method and the identification were performed with reference to a method known in the art and/or Spectrometric Identification of Organic Compounds (7th ed) (Tokyo Kagaku Dojin).
3) The hydrophilic structure was determined by pyrolysis GC/MS and/or derivatization GC/MS. Specific examples of the analysis method include, but are not particularly limited to, the following methods of <Pyrolysis GC/MS> and <Derivatization GC/MS>.

<Pyrolysis GC/MS>

Apparatus: Agilent Technology 6890GC/5973MSD
Column: HP-5MS (L: 30 m, I.D.: 0.25 mm, Film thickness: 0.25 μm)
Carrier: Helium
Ionization method: EI
Mass range: m/z 10-800
Oven temperature: 40°C (5 min hold) → (10°C/min) → 320°C
(16 min hold)
Injection port temperature: 320°C
Transfer temperature: 320°C
Split ratio: Split 1/50
Amount of sample: 0.1 mg
Pyrolysis temperature: 600°C
Interface temperature: 320°C

<Derivatization GC/MS>

Apparatus: Agilent Technology 7890GC/5977MSD
Column: HP-5MS (L: 30 m, I.D.: 0.25 mm, Film thickness: 0.25 μm)
Carrier: Helium
Ionization method: EI
Mass range: m/z 10-800
Oven temperature: 40°C (5 min hold) → (20°C/min) → 320°C (21 min hold)
Injection port temperature: 320°C
Transfer temperature: 320°C
Split ratio: Split 1/10
Injection volume: 2 μL

Derivatizing agent: BSA (N.O-bis(trimethylsilyl)acetamide)

[Stability of aqueous dispersion (23°C)]

An oxyethylene structure-containing polycarbonate polyol obtained in each of Examples and Comparative Examples mentioned later, and a urethane group-containing polycarbonate polyol obtained in each of Application Examples and Application Comparative Examples were each used as a sample. An aqueous dispersion obtained by carrying out the following steps 1 and 2 was left standing at 23°C and evaluated according to the criteria given below.
Step 1: A sample and DPM were weighed into a plastic container such that the solid content of the sample was 80%. The obtained solution was stirred until uniformly dissolved using a stirrer.
Step 2: Pure water was weighed into the plastic container such that the solid content was 20%. The obtained solution was stirred until evenly dispersed using a stirrer to obtain an aqueous dispersion.

[Evaluation criteria]

○: Dispersed in water for 7 days or longer without precipitates
△: Dispersed in water for 1 day or longer and shorter than 7 days without precipitates
×: Not dispersed in water (precipitates were present) or dispersed in water for less than 1 day

[Stability of aqueous dispersion (40°C)]

An oxyethylene structure-containing polycarbonate polyol obtained in each of Examples and Comparative Examples mentioned later, and a urethane group-containing polycarbonate polyol obtained in each of Application Examples and Application Comparative Examples were each used as a sample. An aqueous dispersion obtained by carrying out the following steps 1 and 2 was left standing at 40°C and evaluated according to the criteria given below.
Step 1: A sample and DPM were weighed into a plastic container such that the solid content of the sample was 80%. The obtained solution was stirred until uniformly dissolved using a stirrer.
Step 2: Pure water was weighed into the plastic container such that the solid content was 20%. The obtained solution was stirred until evenly dispersed using a stirrer to obtain an aqueous dispersion.

[Evaluation criteria]

○: Dispersed in water for 7 days or longer without precipitates
△: Dispersed in water for 1 day or longer and shorter than 7 days without precipitates
×: Not dispersed in water (precipitates were present) or dispersed in water for less than 1 day

[Compatibility with ether polyol]

An oxyethylene structure-containing polycarbonate polyol obtained in each of Examples and Comparative Examples mentioned later was used as a sample. The compatibility with ether polyol was determined by carrying out the following steps 1 to 3.
Step 1: A sample and polytetramethylene glycol (number-average molecular weight: 2000) were weighed at 90/10 (% by mass) into a glass container and stirred at 60°C using a stirrer.
Step 2: The contents were transferred from the glass container to a clear colorless glass bottle and left standing at 60°C for 24 hours or longer.
Step 3: The contents in the clear colorless glass bottle were confirmed and evaluated according to the following criteria.

[Evaluation criteria]

○: Uniformly dissolved
△: Dissolved, but clouded

×: White turbid or separated into two layers

[Method for preparing polyurethane coating film (coating film appearance evaluation)]

(Coating material composition)

The starting materials (base agent, curing agent, catalyst, solvent, leveling agent, flatting agent and antisettling agent) used were weighed into a plastic container according to the coating material blending conditions given below, and stirred until uniformly dispersed using a stirrer to obtain a coating material composition.

(Starting material used)

Base agent: Aqueous dispersion after being left standing for 7 days in the section "Stability of aqueous dispersion (23°C) or "Stability of aqueous dispersion (40°C)

Curing agent: WT31-100 (manufactured by Asahi Kasei Corp., NCO% = 17.4, solid content: 100%)
Catalyst: Borchers LH10 (manufactured by OMG Borchers GmbH, 1% aqueous catalyst)
Solvent: Pure water
Leveling agent: BYK-331 (manufactured by BYK Additives & Instruments)
Flatting agent: ACEMATT TS 100 (manufactured by Evonik Industries AG)
Antisettling agent: Disparlon AQ-002 (manufactured by Kusumoto Chemicals, Ltd.)

(Blending conditions)

NCO/OH: 1.25
Coating material solid content: 20%
Catalyst: 0.3% based on the total amount of resins in the base agent and the curing agent
Leveling agent: 0.3% based on the total amount of resins in the base agent and the curing agent
Flatting agent: 10% based on the total amount of resins in the base agent and the curing agent
Antisettling agent: 0.6% based on the total amount of resins in the base agent and the curing agent

(Preparation method)

A coating material composition was prepared in accordance with the procedures of the following steps 1 to 3.
Step 1: A base agent and a solvent were weighed into a plastic container such that the solid content of a coating material composition was 20%. The obtained solution was stirred until uniformly dissolved using a stirrer.
Step 2: A catalyst, a leveling agent, a flatting agent and an antisettling agent were weighed into the plastic container so as to attain the blending conditions mentioned above. The obtained solution was stirred until evenly dispersed using a stirrer.
Step 3: A curing agent was weighed into the plastic container so as to attain NCO/OH = 1.25. The obtained solution was stirred until evenly dispersed using a stirrer to obtain a coating material composition.

(Application step)

Each coating material composition obtained was used, and applied onto a polycarbonate plate ("Takiron PC-1600" (trade name), 2 mm × 70 mm × 150 mm) such that the dry film thickness was a thickness of 40 μm.

(Drying step)

The coating material composition applied onto the polycarbonate plate was baked at 60°C for 2 hours to obtain a polyurethane coating film. The obtained polyurethane coating film was evaluated for various physical properties by methods mentioned later.

(Coating film appearance)

The appearance of the coating film obtained by the drying step was visually observed. A method for determining

the coating film appearance was as follows.

[Determination method]

○: Smooth without cracks or grains
△: Not cracked, though grains were present
×: Cracked and grains were present

[Chemical resistance test (sunscreen resistance test)]

Sunscreen resistance was evaluated as chemical resistance using a commercially available sunscreen cream.

The coating film obtained by the method for preparing a polyurethane coating film was cured at 23°C in a 50% RH atmosphere for 1 day. Onto the coating film thus cured, a sunscreen agent (Neutrogena Ultra Sheer DRY-TOUCH SUNSCREEN Broad Spectrum SPF 45) was applied so as to attain 0.5 g/9 $cm^2$ on the coating film surface, followed by heating at 55°C for 1 hour. Then, the surface of the coating film was thoroughly washed with a small amount of a neutral detergent to remove the sunscreen agent. The coating film was dried at 23°C in a 50% RH atmosphere on a horizontal table. The obtained coating film was subjected to appearance evaluation and evaluation by the pencil hardness method given below, and its chemical resistance was evaluated according to the criteria given below. The chemical resistance is an index for endurance. The appearance of the coating film obtained by the method for preparing a polyurethane coating film was regarded as being not evaluable when given "×", because reproducible evaluation was difficult.

(Appearance evaluation)

The coating film thus tested was visually observed for the absence of remnants of the sunscreen agent or abnormalities such as swelling or peeling of the coating film and evaluated according to the following criteria.

○: The appearance of the coating film was not changed.
△: The appearance of the coating film was slightly changed.
×: The appearance of the coating film was changed to have swelling and/or remnants.

(Evaluation by pencil hardness method)

The coating film thus tested was observed in accordance with the pencil hardness method of JIS K5600-5-6: 1999 for the presence or absence of a pencil scratch mark remaining on the coating film using a 6B pencil, and evaluated according to the following criteria.

○: No scratch mark was observed.
△: A faint scratch mark was observed.
×: A clear scratch mark was observed, or peeling of the coating film was observed.

(Evaluation criteria of chemical resistance)

◎: "○" in appearance and "○" in the pencil hardness method
○: "○" in appearance and "△" in the pencil hardness method, or "△" in appearance and "○" in the pencil hardness method
△: "△" in appearance and "△" in the pencil hardness method
×: "×" determined in any one or more of appearance and the pencil hardness method

[Stability of aqueous polyurethane (polyurethane dispersion (PUD) film)]

(Starting material used)

Oxyethylene structure-containing polycarbonate polyol (hereinafter, also abbreviated to "Polyol") obtained in each of Examples and Comparative Examples mentioned later

DMPA (2,2-dimethylolpropionic acid)
Methyl ethyl ketone (MEK)
Dibutyltin dilaurate (DBTDL)
IPDI (isophorone diisocyanate)
Triethylamine (TEA)
Pure water
Ethylenediamine (EDA)

(Amount added)

Polyol, IPDI, DMPA, TEA, and EDA were added so as to attain a molar ratio described in each of Application Examples and Application Comparative Examples.

DBTDL was added at 100 ppm based on the total amount of Polyol, IPDI, and DMPA. If necessary, DBTDL can be diluted with toluene for addition (e.g., a 5% solution of DBTDL in toluene).

MEK was added such that the solid content in a prepolymer step was 65%. However, the solid content may be appropriately adjusted by the addition of MEK if viscosity is elevated in the prepolymer step.

Pure water was added such that the final solid content after a MEK removal step was 30%. However, the solid content may be appropriately adjusted by the addition of pure water if viscosity is high in a chain extension step.

(Prepolymer step)

The internal atmosphere of a 1 L separable flask to which a stirrer, a thermometer, a reflux condenser, a nitrogen blowing tube, and a dropping funnel were attached was purged with nitrogen. Polyol, DMPA, DBTDL, and MEK were added to the flask and stirred at 200 rpm for 15 minutes under reflux at 80°C. Subsequently, IPDI was added thereto with a syringe, and the mixture was stirred under reflux at 80°C until NCO% reached 3.5 ± 0.3% by mass to obtain a solution of a terminal isocyanate group-containing urethane prepolymer in MEK. The NCO% is the ratio of the mass of an isocyanate group in polyisocyanate to the total mass of the starting materials used in the prepolymer step.

(Neutralization step and emulsification step)

The obtained urethane prepolymer solution was cooled to 35°C, and TEA was added thereto with stirring at 500 rpm. Subsequently, while the solution was kept at 35°C and the stirring at 500 rpm was continued, pure water was added dropwise thereto at a rate of 10 mL/min to obtain an emulsion (emulsified liquid).

(Chain extension step)

While the obtained emulsion was kept at 35°C and the stirring at 500 rpm was continued, EDA was added thereto for chain extension reaction.

(MEK distillation off step)

Methyl ethyl ketone was distilled off under reduced pressure by the heating of the solution after the chain extension reaction to obtain an aqueous polyurethane solution.

(Stability)

The obtained aqueous polyurethane solution was left standing at 23°C and evaluated according to the following criteria.

[Evaluation criteria]

○: Dispersed in water for 7 days or longer without precipitates
△: Dispersed in water for 1 day or longer and shorter than 7 days without precipitates
×: Impossible to prepare an aqueous polyurethane solution, or precipitates occurred in less than 1 day

[Molecular weight of aqueous polyurethane (polyurethane dispersion (PUD) film)]

The number-average molecular weight (Mn) of an aqueous polyurethane obtained in each of Application Examples and Application Comparative Examples mentioned later was measured by the following method.

The concentration of the measurement sample was adjusted to 0.5% by mass with N,N-dimethylformamide (hereinafter, referred to as DMF). The number-average molecular weight (Mn) based on standard polystyrene was measured using the following GPC apparatus.

GPC apparatus: HLC-8320 manufactured by Tosoh Corp.
Analytical column: Four columns of TSKgel SuperHM-H
Guard column: TSKgel guard column H-H
Reference column: Two columns of TSKgel SuperH-RC
Eluent: N,N-dimethylformamide (hereinafter, referred to as DMF)
Flow rate: 1.0 mL/min
Column temperature: 40°C
RI detector: RI (apparatus: built-in HLC-8320)
Calibration curve: Standard polystyrene (manufactured by Tosoh Corp.)

- F-40 (molecular weight: $4.27 \times 10^5$)
- F-20 (molecular weight: $1.90 \times 10^5$)
- F-10 (molecular weight: $9.64 \times 10^4$)
- F-4 (molecular weight: $3.79 \times 10^4$)
- F-2 (molecular weight: $1.81 \times 10^4$)
- F-1 (molecular weight: $1.02 \times 10^4$)
- A-5000 (molecular weight: $5.97 \times 10^3$)
- A-2500 (molecular weight: $2.63 \times 10^3$)
- A-1000 (molecular weight: $1.05 \times 10^3$)

Calibration curve expression: Cubic polynomial

[FT-IR measurement]

An oxyethylene structure-containing polycarbonate polyol obtained in each of Examples and Comparative Examples mentioned later was used as a sample, and the infrared absorption spectrum absorbance of the sample was measured by FT-IR (Fourier transform infrared spectrometer) in accordance with the following method.

The measurement sample was thinly spread over a rock salt plate (NaCl plate, 35 × 35 × 5 mm), and the infrared absorption spectrum absorbance of the sample was measured by FT-IR using the following apparatus and conditions.

FI-IR apparatus: FT/IR-4600 type A (JASCO Corp.)
Light source: Standard light source
Detector: TGS
The number of scans: 16
Resolution: 4 $cm^{-1}$
Zero filling: On
Apodization: Cosine
Gain: Auto (2)
Aperture: Auto (7.1 mm)
Scan speed: Auto (2 mm/sec)
Filter: Auto (30000 Hz)
Data type: Equally spaced data
Abscissa: Wavenumber ($cm^{-1}$)
Ordinate: Abs
Start: 400 $cm^{-1}$
End: 40000 $cm^{-1}$

[Polymerization Example 1]

A 20 L reactor equipped with a rectifying column packed with a regular packing material, and a stirring apparatus was charged with 4580 g of 1,5-pentanediol, 5000 g of 1,6-hexanediol, and 7600 g of ethylene carbonate. Then, 0.860 g of titanium tetra-n-butoxide was placed therein as a catalyst. While a portion of the distillate was extracted, the mixture was

reacted at a reactor internal temperature of 165 to 175°C for 12 hours. Then, the reactor was connected directly to a condenser. The reactor internal temperature was raised to 180 to 190°C. Then, the pressure was gradually lowered, and reaction was performed. As a result, polycarbonate polyol P-1 (8608 g) was obtained.

The obtained polycarbonate polyol P-1 had an average number of carbon atoms of 5.5 and a hydroxy value of 110.0 mg-KOH/g.

[Polymerization Example 2]

A 2 L glass flask (reactor) equipped with a rectifying column packed with a regular packing material, and a stirring apparatus was charged with 497 g of 1,4-butanediol, 468 g of 1,6-hexanediol, and 840 g of ethylene carbonate. Then, 0.180 g of titanium tetra-n-butoxide was placed therein as a catalyst. While a portion of the distillate was extracted, the mixture was reacted at a reaction temperature of 145 to 165°C for 24 hours. Subsequently, the reactor was connected directly to a condenser. The reaction temperature was raised to 165 to 185°C. Then, the pressure was gradually lowered, and reaction was further performed to obtain polycarbonate polyol P-2 (740 g).

The obtained polycarbonate polyol P-2 had an average number of carbon atoms of 5.0 and a hydroxy value of 56.1 mg-KOH/g.

[Polymerization Example 3]

A 2 L glass flask (reactor) equipped with a rectifying column packed with a regular packing material, and a stirring apparatus was charged with 832 g of 1,3-propanediol, 5 g of 1,6-hexanediol, and 967 g of ethylene carbonate. Then, 0.100 g of titanium tetra-n-butoxide was placed therein as a catalyst. While a portion of the distillate was extracted, the mixture was reacted at a reaction temperature of 160 to 165°C for 24 hours. Subsequently, the reactor was connected directly to a condenser. The reaction temperature was raised to 165 to 175°C. Then, the pressure was gradually lowered, and reaction was further performed to obtain polycarbonate polyol P-3 (559 g).

The obtained polycarbonate polyol P-3 had an average number of carbon atoms of 3.03 and a hydroxy value of 56.2 mg-KOH/g.

[Polymerization Example 4]

A 2 L glass flask (reactor) equipped with a rectifying column packed with a regular packing material, and a stirring apparatus was charged with 470 g of 2-methyl-1,3-propanediol, 578 g of 1,10-decanediol, and 751 g of ethylene carbonate. Then, 0.200 g of titanium tetra-n-butoxide was placed therein as a catalyst. While a portion of the distillate was extracted, the mixture was reacted at a reaction temperature of 145 to 165°C for 24 hours. Subsequently, the reactor was connected directly to a condenser. The reaction temperature was raised to 165 to 185°C. Then, the pressure was gradually lowered, and reaction was further performed to obtain polycarbonate polyol P-4 (866 g).

The obtained polycarbonate polyol P-4 had an average number of carbon atoms of 7.0 and a hydroxy value of 56.5 mg-KOH/g.

[Polymerization Example 5]

A 1 L glass flask (reactor) equipped with a stirring apparatus was charged with 800 g of the polycarbonate polyol P-1 obtained in Polymerization Example 1, 55 g of 1,5-pentanediol, and 62 g of 1,6-hexanediol. Subsequently, the mixture was heated with stirring and held at a reactor internal temperature of approximately 165°C for 6 hours. The progression of the reaction, etc. was confirmed by subjecting the reaction solution to GPC measurement over time, and confirming the disappearance of peaks derived from the starting materials and the appearance of a peak derived from a product over time. The obtained polycarbonate polyol P-5 had an average number of carbon atoms of 5.5 and a hydroxy value of 224.0 mg-KOH/g.

[Comparative Example 1]

A 0.5 L glass flask (reactor) equipped with a stirring apparatus was charged with 360 g of the polycarbonate polyol P-1 obtained in Polymerization Example 1 and 40 g of polyethylene glycol (manufactured by FUJIFILM Wako Pure Chemical Corp., "Polyethylene Glycol 1000" (trade name), number-average molecular weight: approximately 1000). Subsequently, the mixture was heated with stirring, and transesterification reaction was performed at a reactor internal temperature of approximately 145°C. The progression and completion of the transesterification reaction were determined by subjecting the reaction solution to GPC measurement over time, and thereby confirming the disappearance of peaks derived from the starting materials and the appearance of a peak derived from a product.

Subsequently, 85% phosphoric acid was added thereto in an amount of 2.0 times in terms of a molar ratio based on titanium tetra-n-butoxide, and heating treatment was performed at a reactor internal temperature of 115°C for 3 hours to obtain oxyethylene structure-containing polycarbonate polyol HP-1. Results of evaluating the obtained oxyethylene structure-containing polycarbonate polyol are shown in Table 1.

[Comparative Example 2]

A 0.5 L glass flask (reactor) equipped with a stirring apparatus was charged with 360 g of the polycarbonate polyol P-2 obtained in Polymerization Example 2 and 40 g of polyethylene glycol (manufactured by FUJIFILM Wako Pure Chemical Corp., "Polyethylene Glycol 1000" (trade name), number-average molecular weight: approximately 1000). Subsequently, the mixture was heated with stirring, and transesterification reaction was performed at a reactor internal temperature of approximately 145°C. The progression and completion of the transesterification reaction were determined by subjecting the reaction solution to GPC measurement over time, and thereby confirming the disappearance of peaks derived from the starting materials and the appearance of a peak derived from a product.

Subsequently, dibutyl phosphate was added thereto in an amount of 2.0 times in terms of a molar ratio based on titanium tetra-n-butoxide, and heating treatment was performed at a reactor internal temperature of 115°C for 3 hours to obtain oxyethylene structure-containing polycarbonate polyol HP-2. Results of evaluating the obtained oxyethylene structure-containing polycarbonate polyol are shown in Table 1.

[Comparative Example 3]

A 0.5 L glass flask (reactor) equipped with a stirring apparatus was charged with 270 g of the polycarbonate polyol P-3 obtained in Polymerization Example 3 and 30 g of polyethylene glycol (manufactured by FUJIFILM Wako Pure Chemical Corp., "Polyethylene Glycol 1000" (trade name), number-average molecular weight: approximately 1000). Subsequently, the mixture was heated with stirring, and transesterification reaction was performed at a reactor internal temperature of approximately 145°C. The progression and completion of the transesterification reaction were determined by subjecting the reaction solution to GPC measurement over time, and thereby confirming the disappearance of peaks derived from the starting materials and the appearance of a peak derived from a product.

Subsequently, dibutyl phosphate was added thereto in an amount of 2.0 times in terms of a molar ratio based on titanium tetra-n-butoxide, and heating treatment was performed at a reactor internal temperature of 115°C for 3 hours to obtain oxyethylene structure-containing polycarbonate polyol HP-3. Results of evaluating the obtained oxyethylene structure-containing polycarbonate polyol are shown in Table 1.

[Comparative Example 4]

A 0.5 L glass flask (reactor) equipped with a stirring apparatus was charged with 360 g of the polycarbonate polyol P-4 obtained in Polymerization Example 4 and 40 g of polyethylene glycol (manufactured by FUJIFILM Wako Pure Chemical Corp., "Polyethylene Glycol 2000" (trade name), number-average molecular weight: approximately 2000). Subsequently, the mixture was heated with stirring, and transesterification reaction was performed at a reactor internal temperature of approximately 145°C. The progression and completion of the transesterification reaction were determined by subjecting the reaction solution to GPC measurement over time, and thereby confirming the disappearance of peaks derived from the starting materials and the appearance of a peak derived from a product.

Subsequently, dibutyl phosphate was added thereto in an amount of 2.0 times in terms of a molar ratio based on titanium tetra-n-butoxide, and heating treatment was performed at a reactor internal temperature of 115°C for 3 hours to obtain oxyethylene structure-containing polycarbonate polyol HP-4. Results of evaluating the obtained oxyethylene structure-containing polycarbonate polyol are shown in Table 1.

[Comparative Example 5]

A 0.5 L glass flask (reactor) equipped with a stirring apparatus was charged with 300 g of the polycarbonate polyol P-1 obtained in Polymerization Example 1 and 100 g of polyethylene glycol (manufactured by FUJIFILM Wako Pure Chemical Corp., "Polyethylene Glycol 1000" (trade name), number-average molecular weight: approximately 1000). Subsequently, the mixture was heated with stirring, and transesterification reaction was performed at a reactor internal temperature of approximately 145°C. The progression and completion of the transesterification reaction were determined by subjecting the reaction solution to GPC measurement over time, and thereby confirming the disappearance of peaks derived from the starting materials and the appearance of a peak derived from a product.

Subsequently, dibutyl phosphate was added thereto in an amount of 2.0 times in terms of a molar ratio based on titanium tetra-n-butoxide, and heating treatment was performed at a reactor internal temperature of 115°C for 3 hours to

obtain oxyethylene structure-containing polycarbonate polyol HP-5. Results of evaluating the obtained oxyethylene structure-containing polycarbonate polyol are shown in Table 1.

[Comparative Example 6]

A 0.5 L glass flask (reactor) equipped with a stirring apparatus was charged with 392 g of the polycarbonate polyol P-1 obtained in Polymerization Example 1 and 8 g of polyethylene glycol (manufactured by FUJIFILM Wako Pure Chemical Corp., "Polyethylene Glycol 1000" (trade name), number-average molecular weight: approximately 1000). Subsequently, the mixture was heated with stirring, and transesterification reaction was performed at a reactor internal temperature of approximately 145°C. The reaction was continued after disappearance of peaks derived from the starting materials by subjecting the reaction solution to GPC measurement over time. When the reaction solution was subjected to NMR measurement over time, the value of the expression (i) was increased over time due to the formation of a structure represented by the formula (BB). However, the progression and completion of the reaction were determined because the value of the expression (i) became constant before reaching the range of 150.0 to 400.0.
Subsequently, dibutyl phosphate was added thereto in an amount of 2.0 times in terms of a molar ratio based on titanium tetra-n-butoxide, and heating treatment was performed at a reactor internal temperature of 115°C for 3 hours to obtain oxyethylene structure-containing polycarbonate polyol HP-6. Results of evaluating the obtained oxyethylene structure-containing polycarbonate polyol are shown in Table 1.

[Comparative Example 7]

A 0.5 L glass flask (reactor) equipped with a stirring apparatus was charged with 160 g of the polycarbonate polyol P-1 obtained in Polymerization Example 1 and 240 g of polyethylene glycol (manufactured by FUJIFILM Wako Pure Chemical Corp., "Polyethylene Glycol 1000" (trade name), number-average molecular weight: approximately 1000). Subsequently, the mixture was heated with stirring, and transesterification reaction was performed at a reactor internal temperature of approximately 145°C. The progression and completion of the transesterification reaction were determined by subjecting the reaction solution to GPC measurement over time, and thereby confirming the disappearance of peaks derived from the starting materials and the appearance of a peak derived from a product.
Subsequently, dibutyl phosphate was added thereto in an amount of 2.0 times in terms of a molar ratio based on titanium tetra-n-butoxide, and heating treatment was performed at a reactor internal temperature of 115°C for 3 hours to obtain oxyethylene structure-containing polycarbonate polyol HP-7. Results of evaluating the obtained oxyethylene structure-containing polycarbonate polyol are shown in Table 1.

[Table 2]

Table 1

| | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|
| Hydroxy value (OHV) | 108.7 | 61.1 | 62.3 | 56.7 | 110.2 | 112.2 | 110.8 |
| Number-average molecular weight | 1238 | 2395 | 2340 | 2198 | 1135 | 1129 | 1180 |
| Mw/Mn | 2.11 | 2.25 | 2.31 | 2.33 | 2.16 | 2.21 | 2.15 |
| % by mol of formula (A) based on total molar quantity of formula (A) and formula (B) | 73.9% | 74.6% | 78.5% | 55.9% | 46.6% | 93.4% | 16.2% |
| % by mol of formula (B) based on total molar quantity of formula (A) and formula (B) | 26.1% | 25.4% | 21.5% | 44.1% | 53.4% | 6.6% | 83.8% |
| Formula (BB)/formula (A) | 0.0265 | 0.0155 | 0.0131 | 0.0201 | 0.0560 | 0.0060 | 0.3011 |

(continued)

Table 1

| | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|
| Value of expression (i) | 125.7 | 146.2 | 142.6 | 100.2 | 119.0 | 102.6 | 424.0 |
| Average number of carbon atoms of polyvalent hydroxy compound (except for polyvalent hydroxy compound having oxyethylene structure) | 5.5 | 5.0 | 3.0 | 7.0 | 5.5 | 5.5 | 5.5 |
| Molecular weight of polyvalent hydroxy compound having oxyethylene structure | 1213 | 1220 | 1216 | 2331 | 1219 | 1214 | 1210 |
| Stability of aqueous dispersion (23°C) | ○ | ○ | ○ | ○ | ○ | ○ | ○ |
| Stability of aqueous dispersion (40°C) | × | × | × | × | × | × | ○ |
| Compatibility with ether polyol | Δ | Δ | Δ | Δ | Δ | Δ | ○ |
| Coating film appearance of coating material using aqueous dispersion (23°C) × base agent after 7 days | ○ | ○ | ○ | ○ | ○ | ○ | ○ |
| Sunscreen resistance of coating film obtained from coating material using aqueous dispersion (23°C) × base agent after 7 days | ○ | ◎ | ◎ | Δ | ○ | ○ | × |
| Coating film appearance of coating material using aqueous dispersion (40°C) × base agent after 7 days | × | × | × | × | × | × | ○ |
| Sunscreen resistance of coating film obtained from coating material using aqueous dispersion (40°C) × base agent after 7 days | Not evaluable | Not evaluable | Not evaluable | Not evaluable | Not evaluable | Not evaluable | × |

[Example 1]

A 1.0 L glass flask (reactor) equipped with a stirring apparatus was charged with 90 parts by mass (360 g) of the polycarbonate diol P-1 obtained in Polymerization Example 1 and 10 parts by mass (40 g) of polyethylene glycol (manufactured by FUJIFILM Wako Pure Chemical Corp., "Polyethylene Glycol 1000" (trade name), number-average molecular weight: approximately 1000). Subsequently, the mixture was heated with stirring, and transesterification reaction was performed at a reactor internal temperature of approximately 145°C. The reaction was continued after disappearance of peaks derived from the starting materials by subjecting the reaction solution to GPC measurement over time. When the reaction solution was subjected to NMR measurement over time, the value of the expression (i) was increased over time due to the formation of a structure represented by the formula (BB). However, the progression and completion of the transesterification reaction were determined because the value of the expression (i) was confirmed to reach the range of 150.0 to 400.0.

Subsequently, 85% phosphoric acid was added thereto in an amount of 2.0 times in terms of a molar ratio based on titanium tetra-n-butoxide, and heating treatment was performed at a reactor internal temperature of 115°C for 3 hours to obtain oxyethylene structure-containing polycarbonate polyol JP-1. Results of evaluating the obtained oxyethylene structure-containing polycarbonate polyol are shown in Table 2.

[Example 2]

A 0.5 L glass flask (reactor) equipped with a stirring apparatus was charged with 360 g of the polycarbonate polyol P-2 obtained in Polymerization Example 2 and 40 g of polyethylene glycol (manufactured by FUJIFILM Wako Pure Chemical Corp., "Polyethylene Glycol 1000" (trade name), number-average molecular weight: approximately 1000). Subsequently, the mixture was heated with stirring, and transesterification reaction was performed at a reactor internal temperature of approximately 145°C. The reaction was continued after disappearance of peaks derived from the starting materials by subjecting the reaction solution to GPC measurement over time. When the reaction solution was subjected to NMR measurement over time, the value of the expression (i) was increased over time due to the formation of a structure represented by the formula (BB). However, the progression and completion of the transesterification reaction were determined because the value of the expression (i) was confirmed to reach the range of 150.0 to 400.0.

Subsequently, dibutyl phosphate was added thereto in an amount of 2.0 times in terms of a molar ratio based on titanium tetra-n-butoxide, and heating treatment was performed at a reactor internal temperature of 115°C for 3 hours to obtain oxyethylene structure-containing polycarbonate polyol JP-2. Results of evaluating the obtained oxyethylene structure-containing polycarbonate polyol are shown in Table 2.

[Example 3]

A 0.5 L glass flask (reactor) equipped with a stirring apparatus was charged with 270 g of the polycarbonate polyol P-3 obtained in Polymerization Example 3 and 30 g of polyethylene glycol (manufactured by FUJIFILM Wako Pure Chemical Corp., "Polyethylene Glycol 1000" (trade name), number-average molecular weight: approximately 1000). Subsequently, the mixture was heated with stirring, and transesterification reaction was performed at a reactor internal temperature of approximately 145°C. The reaction was continued after disappearance of peaks derived from the starting materials by subjecting the reaction solution to GPC measurement over time. When the reaction solution was subjected to NMR measurement over time, the value of the expression (i) was increased over time due to the formation of a structure represented by the formula (BB). However, the progression and completion of the transesterification reaction were determined because the value of the expression (i) was confirmed to reach the range of 150.0 to 400.0.

Subsequently, dibutyl phosphate was added thereto in an amount of 2.0 times in terms of a molar ratio based on titanium tetra-n-butoxide, and heating treatment was performed at a reactor internal temperature of 115°C for 3 hours to obtain oxyethylene structure-containing polycarbonate polyol JP-3. Results of evaluating the obtained oxyethylene structure-containing polycarbonate polyol are shown in Table 2.

[Example 4]

A 0.5 L glass flask (reactor) equipped with a stirring apparatus was charged with 360 g of the polycarbonate polyol P-4 obtained in Polymerization Example 4 and 40 g of polyethylene glycol (manufactured by FUJIFILM Wako Pure Chemical Corp., "Polyethylene Glycol 2000" (trade name), number-average molecular weight: approximately 2000). Subsequently, the mixture was heated with stirring, and transesterification reaction was performed at a reactor internal temperature of approximately 145°C. The reaction was continued after disappearance of peaks derived from the starting materials by subjecting the reaction solution to GPC measurement over time. When the reaction solution was subjected to NMR measurement over time, the value of the expression (i) was increased over time due to the formation of a structure

represented by the formula (BB). However, the progression and completion of the transesterification reaction were determined because the value of the expression (i) was confirmed to reach the range of 150.0 to 400.0.

Subsequently, dibutyl phosphate was added thereto in an amount of 2.0 times in terms of a molar ratio based on titanium tetra-n-butoxide, and heating treatment was performed at a reactor internal temperature of 115°C for 3 hours to obtain oxyethylene structure-containing polycarbonate polyol JP-4. Results of evaluating the obtained oxyethylene structure-containing polycarbonate polyol are shown in Table 2.

[Example 5]

A 0.5 L glass flask (reactor) equipped with a stirring apparatus was charged with 300 g of the polycarbonate polyol P-1 obtained in Polymerization Example 1 and 100 g of polyethylene glycol (manufactured by FUJIFILM Wako Pure Chemical Corp., "Polyethylene Glycol 1000" (trade name), number-average molecular weight: approximately 1000). Subsequently, the mixture was heated with stirring, and transesterification reaction was performed at a reactor internal temperature of approximately 145°C. The reaction was continued after disappearance of peaks derived from the starting materials by subjecting the reaction solution to GPC measurement over time. When the reaction solution was subjected to NMR measurement over time, the value of the expression (i) was increased over time due to the formation of a structure represented by the formula (BB). However, the progression and completion of the transesterification reaction were determined because the value of the expression (i) was confirmed to reach the range of 150.0 to 400.0.

Subsequently, dibutyl phosphate was added thereto in an amount of 2.0 times in terms of a molar ratio based on titanium tetra-n-butoxide, and heating treatment was performed at a reactor internal temperature of 115°C for 3 hours to obtain oxyethylene structure-containing polycarbonate polyol JP-5. Results of evaluating the obtained oxyethylene structure-containing polycarbonate polyol are shown in Table 2.

[Example 6]

A 0.5 L glass flask (reactor) equipped with a stirring apparatus was charged with 360 g of the polycarbonate polyol P-5 obtained in Polymerization Example 5 and 40 g of polyethylene glycol (manufactured by FUJIFILM Wako Pure Chemical Corp., "Polyethylene Glycol 600" (trade name), number-average molecular weight: approximately 600). Subsequently, the mixture was heated with stirring, and transesterification reaction was performed at a reactor internal temperature of approximately 145°C. The reaction was continued after disappearance of peaks derived from the starting materials by subjecting the reaction solution to GPC measurement over time. When the reaction solution was subjected to NMR measurement over time, the value of the expression (i) was increased over time due to the formation of a structure represented by the formula (BB). However, the progression and completion of the transesterification reaction were determined because the value of the expression (i) was confirmed to reach the range of 150.0 to 400.0.

Subsequently, dibutyl phosphate was added thereto in an amount of 2.0 times in terms of a molar ratio based on titanium tetra-n-butoxide, and heating treatment was performed at a reactor internal temperature of 115°C for 3 hours to obtain oxyethylene structure-containing polycarbonate polyol JP-6. Results of evaluating the obtained oxyethylene structure-containing polycarbonate polyol are shown in Table 2.

[Example 7]

A 0.5 L glass flask (reactor) equipped with a stirring apparatus was charged with 252 g of the polycarbonate polyol P-5 obtained in Polymerization Example 5 and 148 g of polyethylene glycol (manufactured by FUJIFILM Wako Pure Chemical Corp., "Polyethylene Glycol 1000" (trade name), number-average molecular weight: approximately 1000). Subsequently, the mixture was heated with stirring, and transesterification reaction was performed at a reactor internal temperature of approximately 145°C. The reaction was continued after disappearance of peaks derived from the starting materials by subjecting the reaction solution to GPC measurement over time. When the reaction solution was subjected to NMR measurement over time, the value of the expression (i) was increased over time due to the formation of a structure represented by the formula (BB). However, the progression and completion of the transesterification reaction were determined because the value of the expression (i) was confirmed to reach the range of 150.0 to 400.0.

Subsequently, dibutyl phosphate was added thereto in an amount of 2.0 times in terms of a molar ratio based on titanium tetra-n-butoxide, and heating treatment was performed at a reactor internal temperature of 115°C for 3 hours to obtain oxyethylene structure-containing polycarbonate polyol JP-7. Results of evaluating the obtained oxyethylene structure-containing polycarbonate polyol are shown in Table 2.

[Table 3]

| Table 2 | | | | | | | |
|---|---|---|---|---|---|---|---|
| | Example 1 | Example 2 | Example 3 | Example 4 | Example 5 | Example 6 | Example 7 |
| Hydroxy value (OHV) | 108.3 | 59.8 | 61.2 | 56.2 | 111.1 | 221.1 | 110.5 |
| Number-average molecular weight | 1317 | 2430 | 2315 | 2222 | 1111 | 683 | 1185 |
| Mw/Mn | 2.08 | 2.22 | 2.33 | 2.25 | 2.14 | 2.06 | 2.10 |
| % by mol of formula (A) based on total molar quantity of formula (A) and formula (B) | 75.4% | 76.2% | 78.8% | 54.2% | 46.0% | 69.9% | 33.1% |
| % by mol of formula (B) based on total molar quantity of formula (A) and formula (B) | 24.6% | 23.8% | 21.2% | 45.8% | 54.0% | 30.1% | 66.9% |
| Formula (BB)/formula (A) | 0.0319 | 0.0248 | 0.0240 | 0.0386 | 0.1121 | 0.0695 | 0.2205 |
| Value of expression (i) | 170.8 | 253.2 | 262.1 | 187.3 | 230.6 | 157.7 | 390.6 |
| Average number of carbon atoms of polyvalent hydroxy compound (except for polyvalent hydroxy compound having oxyethylene structure) | 5.5 | 5.0 | 3.0 | 7.0 | 5.5 | 5.5 | 5.5 |
| Molecular weight of polyvalent hydroxy compound having oxyethylene structure | 1215 | 1218 | 1215 | 2322 | 1227 | 654 | 1218 |
| Stability of aqueous dispersion (23°C) | ○ | ○ | ○ | ○ | ○ | ○ | ○ |
| Stability of aqueous dispersion (40°C) | ○ | ○ | ○ | ○ | ○ | ○ | ○ |
| Compatibility with ether polyol | ○ | ○ | ○ | ○ | ○ | ○ | ○ |
| Coating film appearance of coating material using aqueous dispersion (23°C) × base agent after 7 days | ○ | ○ | ○ | ○ | ○ | ○ | ○ |
| Sunscreen resistance of coating film obtained from coating material using aqueous dispersion (23°C) × base agent after 7 days | ○ | ◎ | ◎ | Δ | ○ | ○ | Δ |
| Coating film appearance of coating material using aqueous dispersion (40°C) × base agent after 7 days | ○ | ○ | ○ | ○ | ○ | ○ | ○ |

(continued)

| Table 2 | | | | | | | |
|---|---|---|---|---|---|---|---|
| | Example 1 | Example 2 | Example 3 | Example 4 | Example 5 | Example 6 | Example 7 |
| Sunscreen resistance of coating film obtained from coating material using aqueous dispersion (40°C) × base agent after 7 days | ○ | ◎ | ◎ | Δ | ○ | ○ | Δ |

[Application Example 1 and Application Comparative Example 1]

The oxyethylene structure-containing polycarbonate polyol JP-1 obtained in Example 1 and the oxyethylene structure-containing polycarbonate polyol HP-1 obtained in Comparative Example 1 were used. Polyol, IPDI, DMPA, TEA, and EDA were added so as to attain a molar ratio of Polyol/IPDI/DMPA/TEA/EDA = 1.00/2.48/0.48/0.48/0.60. An aqueous polyurethane (PUD) was synthesized by the method mentioned above, and the obtained aqueous polyurethane was evaluated for its stability. The evaluation results are shown in Table 3.

[Application Example 2 and Application Comparative Example 2]

The oxyethylene structure-containing polycarbonate polyol JP-2 obtained in Example 2 and the oxyethylene structure-containing polycarbonate polyol HP-2 obtained in Comparative Example 2 were used. Polyol, IPDI, DMPA, TEA, and EDA were added so as to attain a molar ratio of Polyol/IPDI/DMPA/TEA/EDA = 1.00/2.75/0.75/0.75/0.50. An aqueous polyurethane (PUD) was synthesized by the method mentioned above, and the obtained aqueous polyurethane was evaluated for its stability. The evaluation results are shown in Table 3.

[Table 4]

| Table 3 | | | | |
|---|---|---|---|---|
| | Application Example 1 | Application Comparative Example 1 | Application Example 2 | Application Comparative Example 2 |
| Number-average molecular weight of PUD | 30869 | 31524 | 63898 | 65261 |
| Stability of PUD | ○ | × | ○ | × |

[Application Example 3]

A 0.3 L glass flask (reactor) equipped with a stirring apparatus was charged with the oxyethylene structure-containing polycarbonate polyol JP-1 obtained in Example 1, and TLA-100 (manufactured by Asahi Kasei Corp., NCO% = 23.3, solid content: 100%, a water-insoluble isocyanate polymer having an isocyanurate ring as a starting material forming a cyclic structure) as an isocyanate compound such that NCO/OH was 0.20 and the amount of the starting materials added was 100 g. Subsequently, the mixture was heated with stirring and reacted at an internal temperature of approximately 120°C in the reactor until a NCO group disappeared to obtain a urethane group-containing polycarbonate polyol. The evaluation results are shown in Table 4. The progression of the reaction was confirmed from the disappearance of an infrared absorption spectrum absorbance (Abs) peak around a wavenumber of 2271 $cm^{-1}$ derived from a NCO group by the FT-IR measurement mentioned above of the reaction solution.

[Application Comparative Example 3]

A urethane group-containing polycarbonate polyol was obtained by use of the same method as in Application Example 3 except that the oxyethylene structure-containing polycarbonate polyol was the oxyethylene structure-containing polycarbonate polyol HP-1 obtained in Comparative Example 1. The evaluation results are shown in Table 4. The progression of the reaction was confirmed from the disappearance of an infrared absorption spectrum absorbance (Abs) peak around a wavenumber of 2271 $cm^{-1}$ derived from a NCO group by the FT-IR measurement mentioned above of the

reaction solution.

[Application Example 4]

A 0.3 L glass flask (reactor) equipped with a stirring apparatus was charged with the oxyethylene structure-containing polycarbonate polyol JP-2 obtained in Example 2, and TLA-100 (manufactured by Asahi Kasei Corp., NCO% = 23.3, solid content: 100%, a water-insoluble isocyanate polymer having an isocyanurate ring as a starting material forming a cyclic structure) as an isocyanate compound such that NCO/OH was 0.10 and the amount of the starting materials added was 100 g. Subsequently, the mixture was heated with stirring and reacted at an internal temperature of approximately 120°C in the reactor until a NCO group disappeared to obtain a urethane group-containing polycarbonate polyol. The evaluation results are shown in Table 4. The progression of the reaction was confirmed from the disappearance of an infrared absorption spectrum absorbance (Abs) peak around a wavenumber of 2271 $cm^{-1}$ derived from a NCO group by the FT-IR measurement mentioned above of the reaction solution.

[Application Comparative Example 4]

A urethane group-containing polycarbonate polyol was obtained by use of the same method as in Application Example 4 except that the oxyethylene structure-containing polycarbonate polyol was the oxyethylene structure-containing polycarbonate polyol HP-2 obtained in Comparative Example 2. The evaluation results are shown in Table 4. The progression of the reaction was confirmed from the disappearance of an infrared absorption spectrum absorbance (Abs) peak around a wavenumber of 2271 $cm^{-1}$ derived from a NCO group by the FT-IR measurement mentioned above of the reaction solution.

[Table 5]

| Table 4 | | | | |
|---|---|---|---|---|
| | Application Example 3 | Application Comparative Example 3 | Application Example 4 | Application Comparative Example 4 |
| Stability of aqueous dispersion of urethane group-containing polycarbonate polyol (40°C) | ○ | × | ○ | × |

As described above, the oxyethylene structure-containing polycarbonate polyols of the present Examples were confirmed to be excellent in stability of an aqueous dispersion and compatibility with ether polyol and also excellent in stability of an aqueous polyurethane obtained using Examples of the present application and/or stability of an aqueous dispersion of a urethane group-containing polycarbonate polyol.

The oxyethylene structure-containing polycarbonate polyol of the present invention can be suitably used in a wide range of fields such as coating materials for automobiles, buses, rail vehicles, building site equipment, agricultural machines, floors, walls or roofs of architectures, metal products, mortar or concrete products, wood products, plastic products, and ceramics construction materials such as calcium silicate boards or plaster boards, etc., and/or polyurethanes.

## Claims

**1.** An oxyethylene structure-containing polycarbonate polyol having a hydroxy value of 10 to 400 mg-KOH/g,

the oxyethylene structure-containing polycarbonate polyol comprising a structural unit represented by the following formula (A), a structural unit represented by the following formula (B), and a structural unit represented by the following formula (BB), wherein

a molar quantity of the structural unit represented by the formula (A) is 30 to 90% by mol based on the total molar quantity of the structural unit represented by the formula (A) and the structural unit represented by the formula (B),

a molar quantity of the structural unit represented by the formula (B) is 10 to 70% by mol based on the total molar quantity of the structural unit represented by the formula (A) and the structural unit represented by the formula (B), and

a value obtained according to the following expression (i) is 150.0 to 400.0:

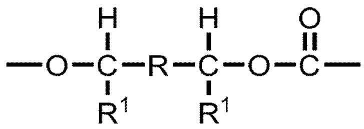 · · · (A)

wherein

R is a divalent aliphatic hydrocarbon group optionally containing a heteroatom, and/or a divalent aromatic hydrocarbon group optionally containing a heteroatom, and
each $R^1$ is independently hydrogen or an aliphatic hydrocarbon group having 1 to 5 carbon atoms,

$$-O-CH_2-CH_2- \quad \cdots (B)$$

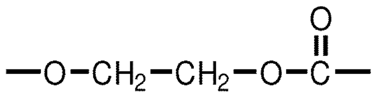 · · · (BB)

$$\left( \frac{BB}{A} \div \frac{B}{A+B} \right) \times Mn \quad \cdots (i)$$

wherein

A is a molar quantity of the structural unit represented by the formula (A),
B is a molar quantity of the structural unit represented by the formula (B),
BB is a molar quantity of the structural unit represented by the formula (BB), and
Mn is a number-average molecular weight of the oxyethylene structure-containing polycarbonate polyol.

**2.** The oxyethylene structure-containing polycarbonate polyol according to claim 1, wherein R is a divalent aliphatic hydrocarbon group optionally containing a heteroatom.

**3.** The oxyethylene structure-containing polycarbonate polyol according to claim 1, wherein a molecular weight distribution (Mw/Mn) is 1.50 to 5.00.

**4.** The oxyethylene structure-containing polycarbonate polyol according to claim 1, wherein $R^1$ is hydrogen.

**5.** The oxyethylene structure-containing polycarbonate polyol according to claim 1, wherein an average number of carbon atoms of a polyvalent hydroxy compound (except for a polyvalent hydroxy compound having an oxyethylene structure) obtained by the hydrolysis of the oxyethylene structure-containing polycarbonate polyol is 2.0 or more and 15.0 or less.

**6.** The oxyethylene structure-containing polycarbonate polyol according to claim 1, wherein a polyvalent hydroxy compound (except for a polyvalent hydroxy compound having an oxyethylene structure) obtained by the hydrolysis of the oxyethylene structure-containing polycarbonate polyol comprises at least one selected from the group consisting of 1,2-propanediol, 1,3-propanediol, 2-methyl-1,3-propanediol, 1,4-butanediol, 1,5-pentanediol, 3-methyl-1,5-pentanediol, and 1,6-hexanediol.

**7.** The oxyethylene structure-containing polycarbonate polyol according to claim 1, wherein a number-average molecular weight of a polyvalent hydroxy compound having an oxyethylene structure obtained by the hydrolysis of the oxyethylene structure-containing polycarbonate polyol is 300 to 3000.

**8.** The oxyethylene structure-containing polycarbonate polyol according to claim 7, wherein the polyvalent hydroxy compound having an oxyethylene structure is polyethylene glycol.

**9.** A urethane-modified oxyethylene structure-containing polycarbonate polyol obtained using the oxyethylene structure-containing polycarbonate polyol according to claim 1.

10. A coating material comprising the oxyethylene structure-containing polycarbonate polyol according to any one of claims 1 to 9.

11. The coating material according to claim 10, wherein the coating material is an aqueous coating material.

12. A polyurethane obtained using the oxyethylene structure-containing polycarbonate polyol according to any one of claims 1 to 9.

13. An aqueous polyurethane obtained using the oxyethylene structure-containing polycarbonate polyol according to any one of claims 1 to 9.

14. An artificial leather comprising the polyurethane according to claim 12.

15. An artificial leather comprising the aqueous polyurethane according to claim 13.

16. A synthetic leather comprising the polyurethane according to claim 12.

17. A synthetic leather comprising the aqueous polyurethane according to claim 13.

18. A coating material comprising the polyurethane according to claim 12.

19. A coating material comprising the aqueous polyurethane according to claim 13.

20. A coating film obtained from the coating material according to claim 10.

21. A coating film obtained from the coating material according to claim 11.

[Fig. 1]

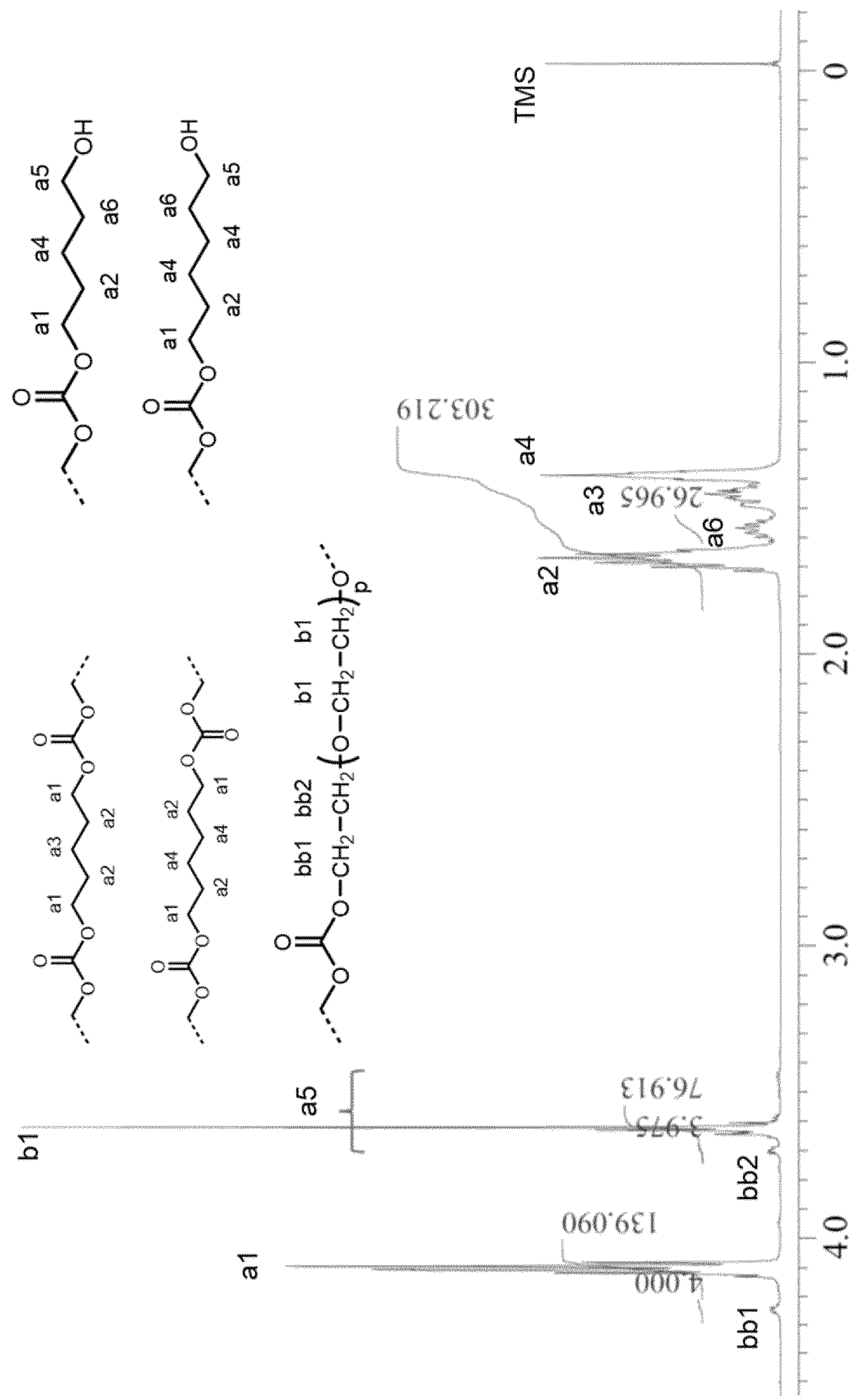
TMS
a4
a3
a6
a2
a5
b1
bb2
a1
bb1
303.219
26.965
76.913
3.975
139.090
4.000
0
1.0
2.0
3.0
4.0

**INTERNATIONAL SEARCH REPORT**

International application No.
**PCT/JP2022/040887**

**A. CLASSIFICATION OF SUBJECT MATTER**

***C08G 64/02***(2006.01)i; ***C08G 18/44***(2006.01)i; ***C08G 65/00***(2006.01)i; ***C09D 5/02***(2006.01)i; ***C09D 169/00***(2006.01)i; ***C09D 175/08***(2006.01)i
FI: C08G64/02; C08G18/44; C09D175/08; C09D5/02; C09D169/00; C08G65/00

According to International Patent Classification (IPC) or to both national classification and IPC

**B. FIELDS SEARCHED**

Minimum documentation searched (classification system followed by classification symbols)

C08G64/02; C08G18/44; C08G65/00; C09D5/02; C09D169/00; C09D175/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2015/170374 A1 (ASAHI KASEI CHEMICALS CORP ) 12 November 2015 (2015-11-12) claims, paragraphs [0074], [0085], table 1, examples | 1-21 |
| X | JP 2015-214599 A (ASAHI KASEI CHEMICALS CORP ) 03 December 2015 (2015-12-03) claims, table 1, examples | 1-21 |
| X | JP 2014-080530 A (ASAHI KASEI CHEMICALS CORP ) 08 May 2014 (2014-05-08) claims, table 1, examples | 1-21 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 January 2023** | **24 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/040887**

| Patent document cited in search report | Publication date (day/month/year) | Patent family member(s) | Publication date (day/month/year) |
|---|---|---|---|
| WO 2015/170374 A1 | 12 November 2015 | EP 3141574 A1<br>claims, paragraphs [0074], [0085], table 1, examples<br>CN 106459421 A<br>CN 110305324 A | |
| JP 2015-214599 A | 03 December 2015 | (Family: none) | |
| JP 2014-080530 A | 08 May 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014080530 A
- WO 2015170374 A
- JP 2019210314 A
- JP 2018012769 A
- JP 2017071685 A